# EUROPEAN PATENT APPLICATION

(11) **EP 3 605 433 A1**
(43) Date of publication of application: **05.02.2020**
(21) Application number: 18776768.6
(22) Date of filing: 08.03.2018
(51) Int. Cl.: G06Q 40/08, G08G 1/00, G08G 1/09

(54) **INFORMATION PROCESSING DEVICE, INFORMATION PROCESSING SYSTEM, INFORMATION PROCESSING METHOD, AND PROGRAM**

(30) Priority: 29.03.2017 JP 2017064443
(71) Applicant: Sony Corporation, Tokyo 108-0075 (JP)
(72) Inventor: MATSUNAGA, Hideyuki, Tokyo 108-0075 (JP); OSATO, Akihito, Tokyo 108-0075 (JP); NODA, Atsushi, Tokyo 108-0075 (JP)
(74) Representative: Witte, Weller & Partner Patentanwälte mbB
(86) International application number: PCT/JP2018/009063
(87) International publication number: WO 2018/180347

(57) **Abstract**

A configuration which calculates an insurance fee of an automobile insurance considering not only driving behavior data associated with a driver but also an awareness level of the driver concerning driving is achieved. Provided are: a driving behavior data acquisition device; an insurance fee calculation device that receives driving behavior data and calculates an insurance fee of an automobile insurance; and a self-awareness test execution device that transmits, to the insurance fee calculation device, an answer by the driver to a self-awareness test for checking an awareness level of the driver concerning driving. The insurance fee calculation device receives an input of a driving behavior score based on the driving behavior data and a test result of the self-awareness test, and executes an insurance fee calculation process that sets the insurance fee such that the insurance fee decreases from a reference insurance fee in accordance with an increase in a correlation between the driving behavior score and the self-awareness test result, and sets the insurance fee such that the insurance fee increases from the reference insurance fee in accordance with a decrease in the correlation between the driving behavior score and the self-awareness test result.

## Description

### [Technical Field]

The present disclosure relates to an information processing device, an information processing system, an information processing method, and a program. More particularly, the present disclosure relates to an information processing device, an information processing system, an information processing method, and a program for performing an insurance fee calculation process of an automobile.

### [Background Art]

Currently, a setting which reduces an insurance fee in accordance with duration of years of no accident by a driver, for example, has been a mainstream of insurances for automobiles, or so-called automobile insurances.

Spreading in recent years has been a telematics insurance which acquires and analyzes driving information associated with each of drivers, such as a traveling distance of a vehicle and driving characteristics, determines whether or not the corresponding driver performs safe driving, and calculates an insurance fee for the corresponding driver on the basis of a determination result.

There are two types of the telematics insurance, i.e., a traveling distance linkage type linked with only a traveling distance (PAYD: Pay As You Drive), and a driving behavior linkage type which calculates an insurance fee considering driving characteristics of a driver, such as driving characteristics of frequencies of sudden braking and sudden starting (PHYD: Pay How You Drive).

For calculating an insurance fee on the basis of driving characteristics of a driver, driving characteristic data associated with the driver needs to be acquired. For this purpose, information collected by various sensors attached to a vehicle is utilized as basic data for insurance calculation.

Note that PTL 1 (JP 2016-147600A) describes an insurance fee calculation process structure based on collection of such driving information, for example.

The driving behavior linkage type (PHYD) telematics insurance calculates an insurance fee on the basis of driving characteristics of a driver.

Specifically, in a case of frequent sudden braking, sudden starting, or sudden steering, for example, it is determined that dangerous driving is frequently performed. In this case, a high insurance fee is set.

However, sudden braking is often used for avoiding a danger, for example. Accordingly, many people have such an opinion that a setting of a high insurance fee only for a reason of frequent sudden braking is questionable.

### [Citation List]

### [Patent Literature]

[PTL 1]
JP 2016-147600A

### [Summary]

### [Technical Problems]

The present disclosure has been developed in consideration of the aforementioned problems, for example. An object of the present disclosure is to provide an information processing device, an information processing system, an information processing method, and a program capable of calculating an insurance fee on the basis of not only driving characteristic data acquired by a sensor or the like equipped on a vehicle, but also an analysis result obtained by analysis of an awareness level of a driver.

### [Solution to Problems]

A first aspect of the present disclosure is directed to an information processing device including an insurance fee calculation unit that receives an input of a driving behavior score based on driving behavior data associated with a driver of an automobile, and a test result of a self-awareness test concerning driving and requesting the driver to answer, and calculates an insurance fee of an automobile insurance. The insurance fee calculation unit executes an insurance fee calculation process that sets the insurance fee such that the insurance fee increases from a reference insurance fee in accordance with a decrease in a correlation between the driving behavior score and the self-awareness test result.

Moreover, a second aspect of the present disclosure is directed to an information processing system including: a driving behavior data acquisition device that is equipped on an automobile and acquires driving behavior data associated with a driver of the automobile; an insurance fee calculation device that receives the driving behavior data acquired by the driving behavior data acquisition device and calculates an insurance fee of an automobile insurance; and a self-awareness test execution device that outputs a self-awareness test for checking an awareness level of the driver concerning driving, and transmits an answer input by the driver to the insurance fee calculation device. The insurance fee calculation device is configured to receive an input of a driving behavior score based on the driving behavior data and a test result of the self-awareness test and calculate the insurance fee of the automobile insurance. The insurance fee calculation device executes an insurance fee calculation process that sets the insurance fee such that the insurance fee decreases from a reference insurance fee in accordance with an increase in a correlation between the driving behavior score and the self-awareness test result, and sets the insurance fee such that the insurance fee increases from the reference insurance fee in accordance with a decrease in the correlation between the driving behavior score and the self-awareness test result.

Furthermore, a third aspect of the present disclosure is directed to an information processing system including: a driving behavior data acquisition device that is equipped on an automobile and acquires driving behavior data associated with a driver of the automobile; and an insurance fee calculation device that receives the driving behavior data acquired by the driving behavior data acquisition device and calculates an insurance fee of an automobile insurance. The insurance fee calculation device is configured to receive an input of a driving behavior score based on the driving behavior data and a test result of a self-awareness test for checking an awareness level of the driver concerning driving, and calculate the insurance fee of the automobile insurance. The insurance fee calculation device executes an insurance fee calculation process that sets the insurance fee such that the insurance fee decreases from a reference insurance fee in accordance with an increase in a correlation between the driving behavior score and the self-awareness test result, and sets the insurance fee such that the insurance fee increases from the reference insurance fee in accordance with a decrease in the correlation between the driving behavior score and the self-awareness test result.

Furthermore, a fourth aspect of the present disclosure is directed to an information processing method executed by an information processing device. The information processing device includes an insurance fee calculation unit that receives an input of a driving behavior score based on driving behavior data associated with a driver of an automobile, and a test result of a self-awareness test concerning driving and requesting the driver to answer, and calculates an insurance fee of an automobile insurance. The insurance fee calculation unit executes an insurance fee calculation process that sets the insurance fee such that the insurance fee decreases from a reference insurance fee in accordance with an increase in a correlation between the driving behavior score and the self-awareness test result, and sets the insurance fee such that the insurance fee increases from the reference insurance fee in accordance with a decrease in the correlation between the driving behavior score and the self-awareness test result.

Furthermore, a fifth aspect of the present disclosure is directed to a program under which an information processing device executes information processing. The information processing device includes an insurance fee calculation unit that receives an input of a driving behavior score based on driving behavior data associated with a driver of an automobile, and a test result of a self-awareness test concerning driving and requesting the driver to answer, and calculates an insurance fee of an automobile insurance. Under the program, the insurance fee calculation unit executes an insurance fee calculation process that sets the insurance fee such that the insurance fee decreases from a reference insurance tee in accordance with an increase in a correlation between the driving behavior score and the self-awareness test result, and sets the insurance fee such that the insurance fee increases from the reference insurance fee in accordance with a decrease in the correlation between the driving behavior score and the self-awareness test result.

Note that the program of the present disclosure is a program capable of providing in a storage medium or a communication medium provided in a computer-readable form for an information processing device or a computer system capable of executing various program codes, for example. Under the program provided in the computer-readable form in the manner described above, processes corresponding to the program are implemented on the information processing device or the computer system.

Further objects, features, and advantages of the present disclosure will become obvious in the light of a following embodiment of the present disclosure and more detailed description based on the accompanying drawings. Note that the system in the present description is constituted by a logical set of configurations including a plurality of devices. The devices of the respective configurations are not necessarily accommodated in an identical housing.

### [Advantageous Effects of Invention]

A configuration implemented according to one embodiment of the present disclosure is a configuration which calculates an insurance fee of an automobile insurance considering not only driving behavior data associated with a driver but also an awareness level of the driver concerning driving.

Specifically, for example, provided are: a driving behavior data acquisition device that acquires driving behavior data associated with a driver; an insurance fee calculation device that receives the driving behavior data and calculates an insurance fee of an automobile insurance; and a self-awareness test execution device that transmits, to the insurance fee calculation device, an answer by the driver to a self-awareness test for checking an awareness level of the driver concerning driving. The insurance fee calculation device receives an input of a driving behavior score based on the driving behavior data and a test result of the self-awareness test, and executes an insurance fee calculation process that sets the insurance fee such that the insurance fee decreases from a reference insurance fee in accordance with an increase in a correlation between the driving behavior score and the self-awareness test result, and sets the insurance fee such that the insurance fee increases from the reference insurance fee in accordance with a decrease in the correlation between the driving behavior score and the self-awareness test result.

This configuration achieves a configuration which calculates an insurance fee of an automobile insurance considering not only driving behavior data associated with the driver but also an awareness level of the driver concerning driving.

Note that advantageous effects described in the present description are presented only by way of example. Accordingly, advantageous effects to be produced are not limited to these effects. Other additional advantageous effects may also be produced.

### [Brief Description of Drawings]

[FIG. 1]

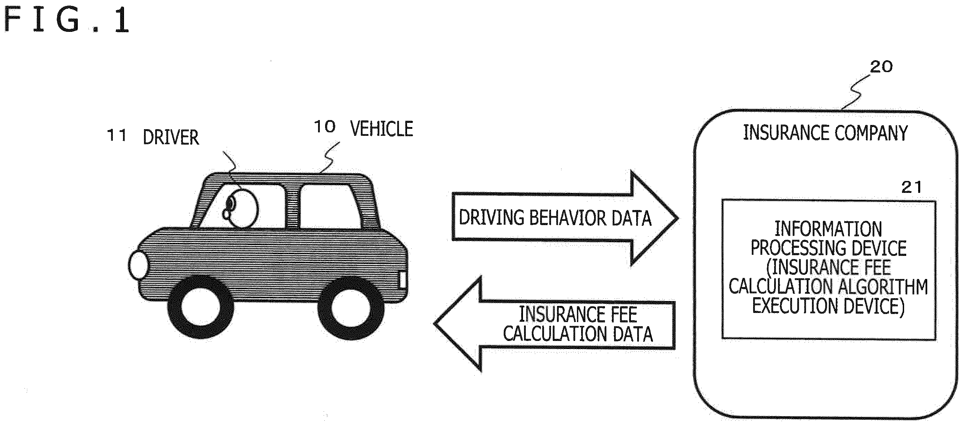

   FIG. 1 is a diagram explaining a telematics insurance.
[FIG. 2]

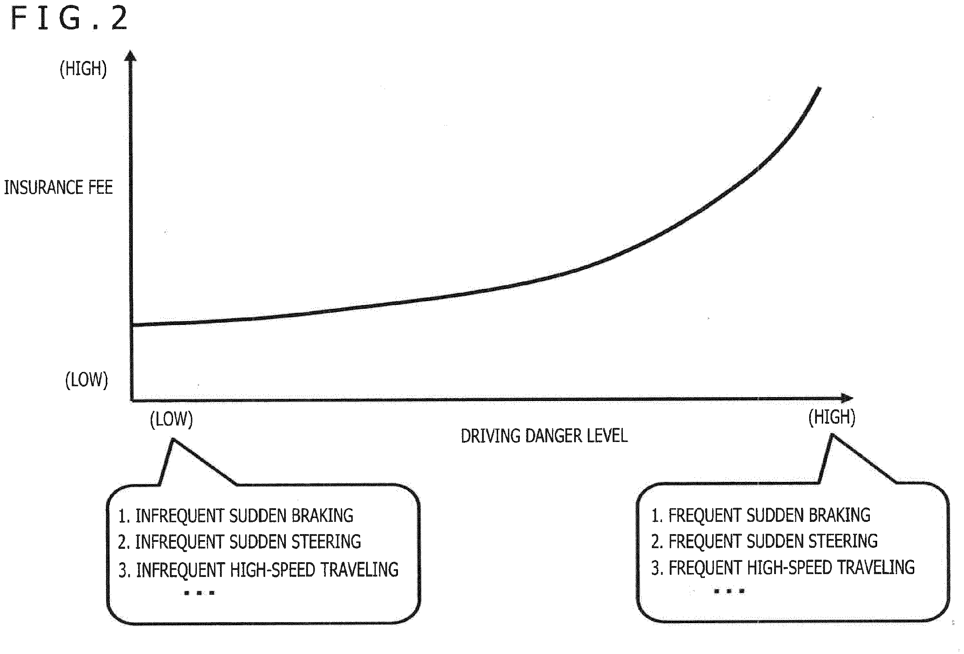

   FIG. 2 is a diagram explaining an insurance fee of the telematics insurance.
[FIG. 3]

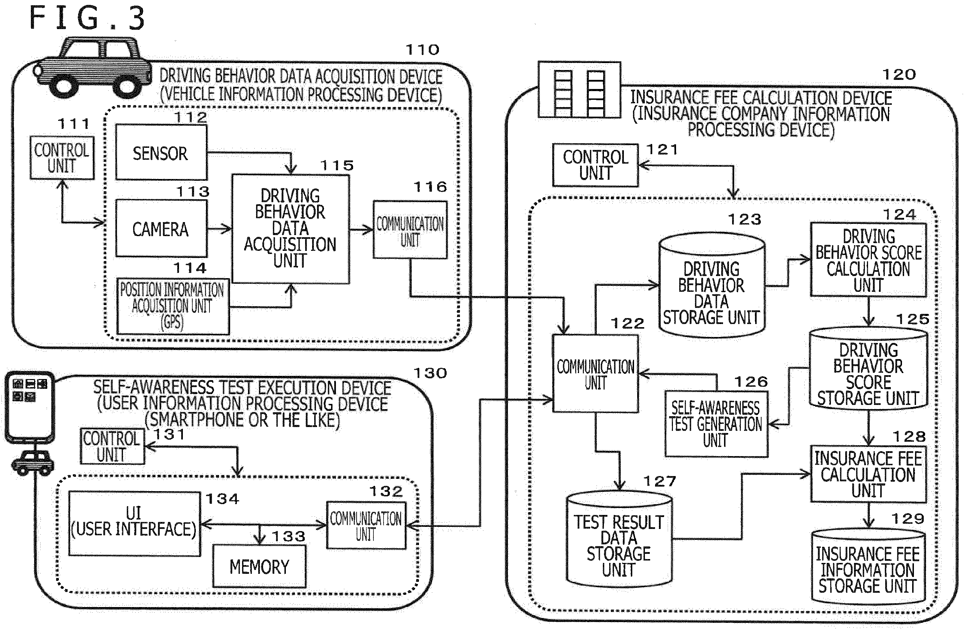

   FIG. 3 is a diagram explaining a configuration of a system of the present disclosure.
[FIG. 4]

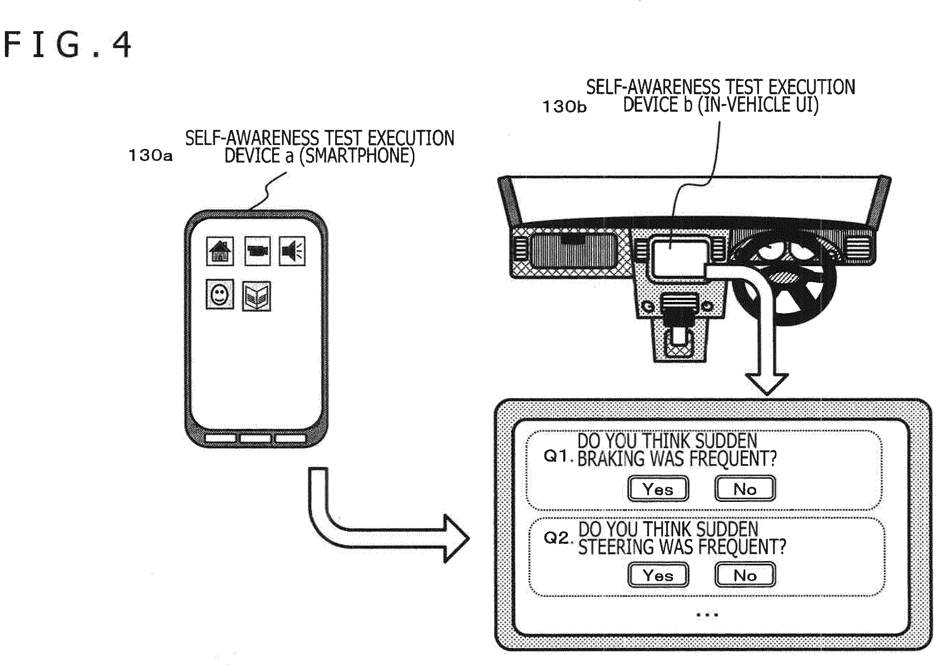

   FIG. 4 is a diagram explaining an example of a self-awareness test execution device.
[FIG. 5]

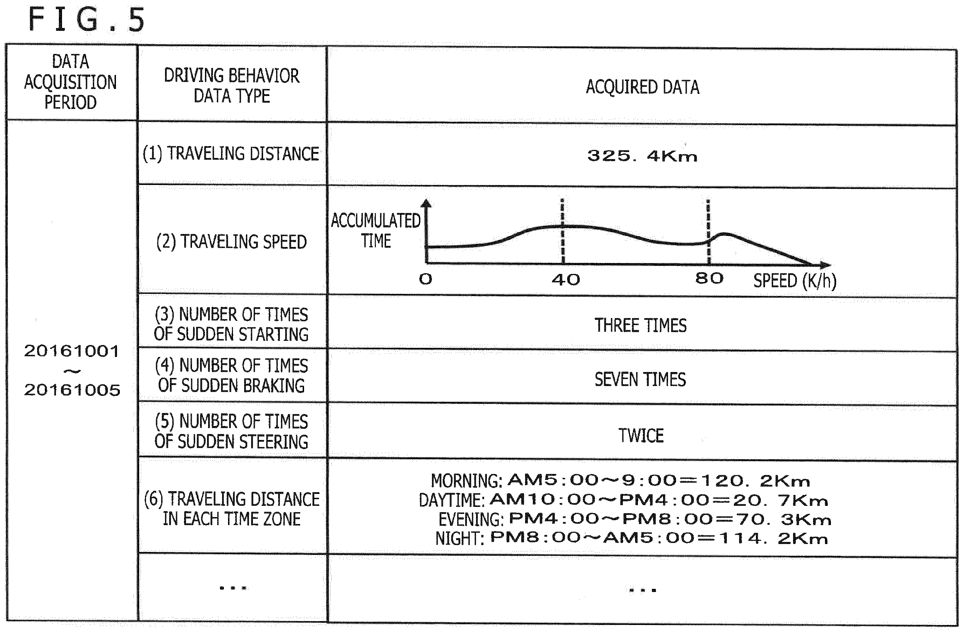

   FIG. 5 is a diagram explaining an example of driving behavior data.
[FIG. 6]

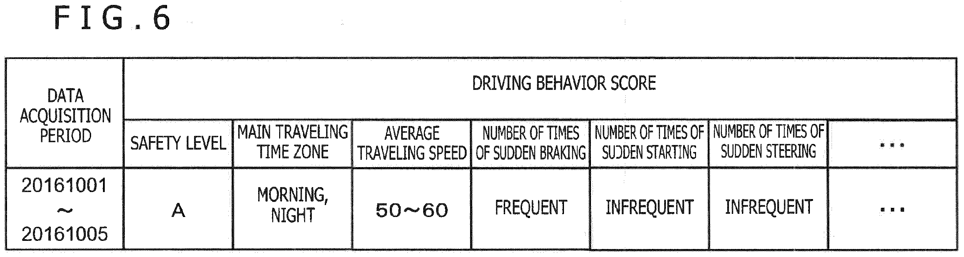

   FIG. 6 is a diagram explaining an example of a driving behavior score.
[FIG. 7]

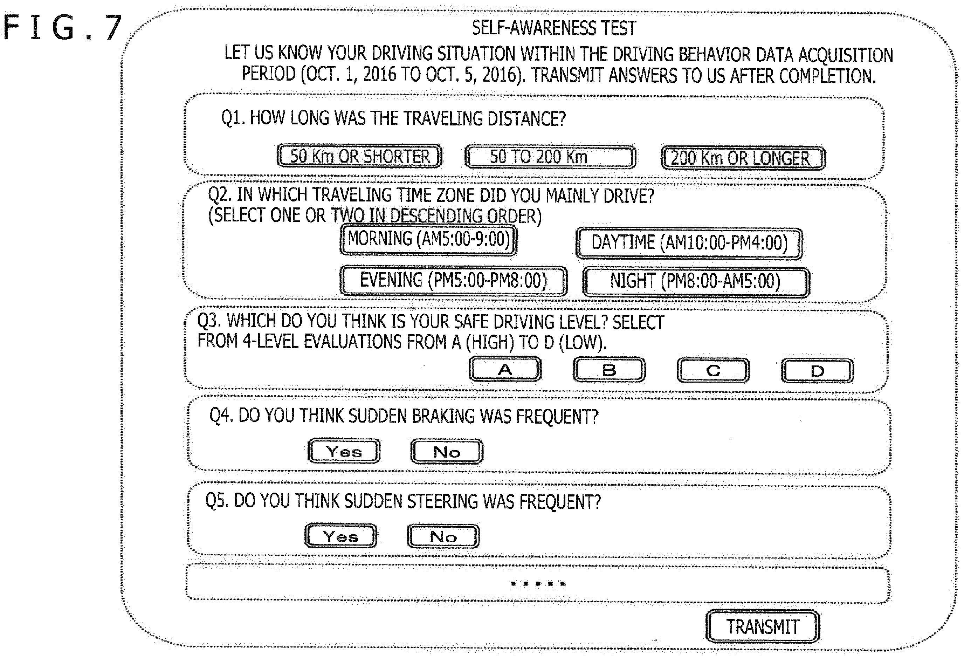

   FIG. 7 is a diagram explaining an example of a self-awareness test.
[FIG. 8]

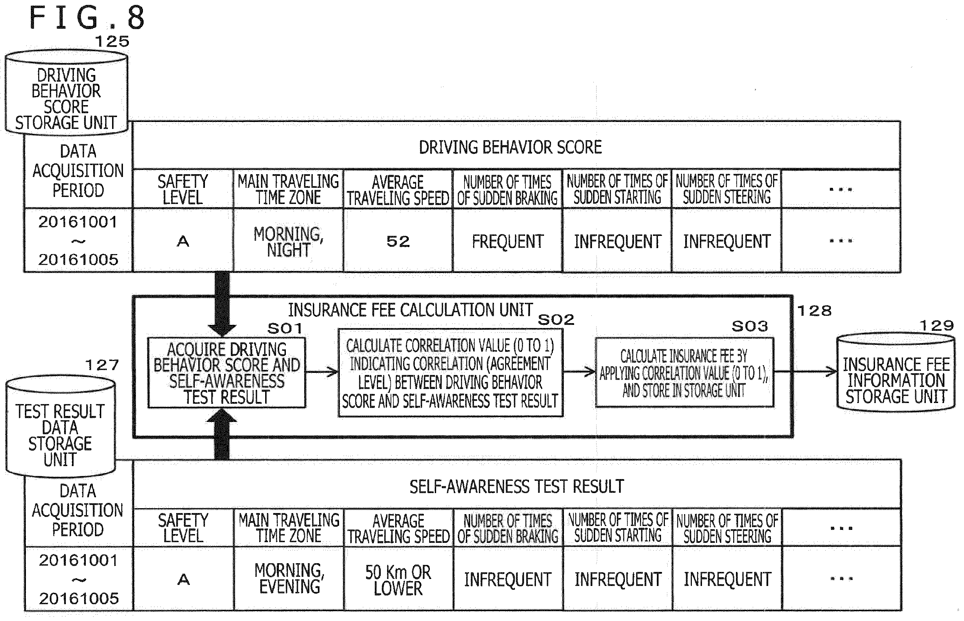

   FIG. 8 is a diagram explaining a process executed by an insurance fee calculation unit.
[FIG. 9]

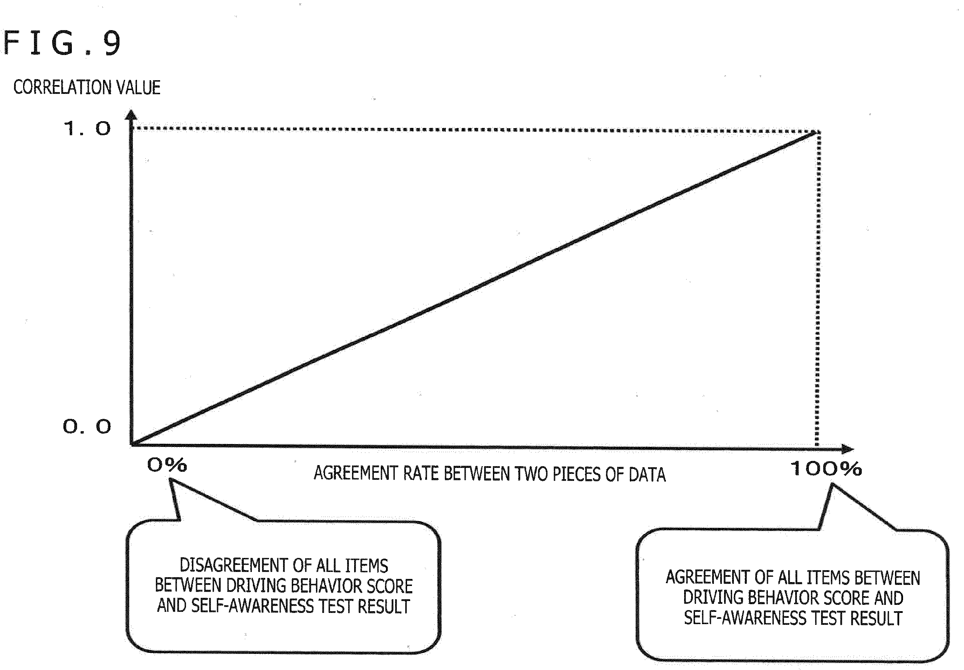

   FIG. 9 is a diagram explaining an insurance fee calculated by the insurance fee calculation unit.
[FIG. 10]

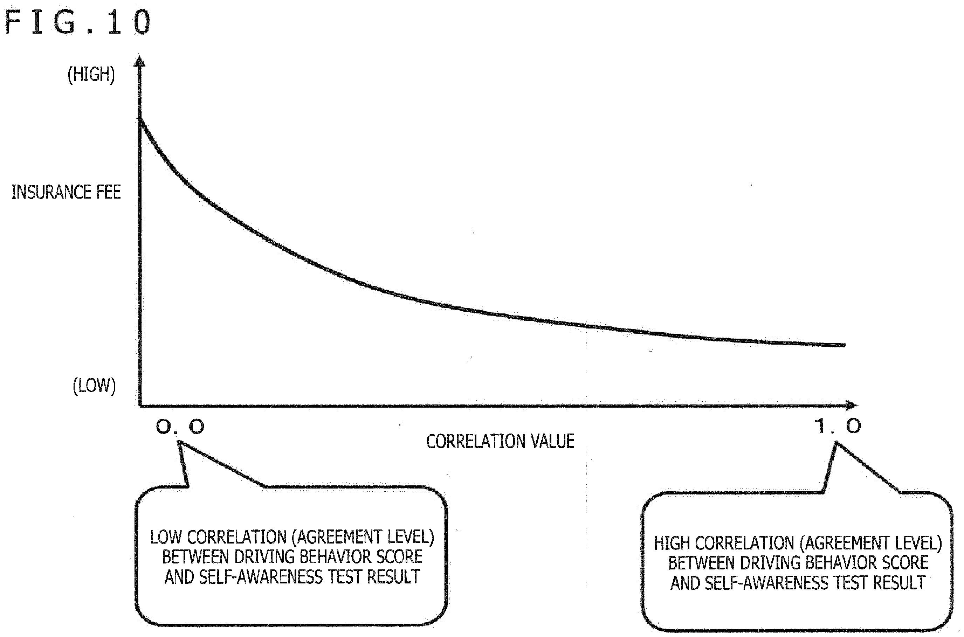

   FIG. 10 is a diagram explaining the insurance fee calculated by the insurance fee calculation unit.
[FIG. 11]

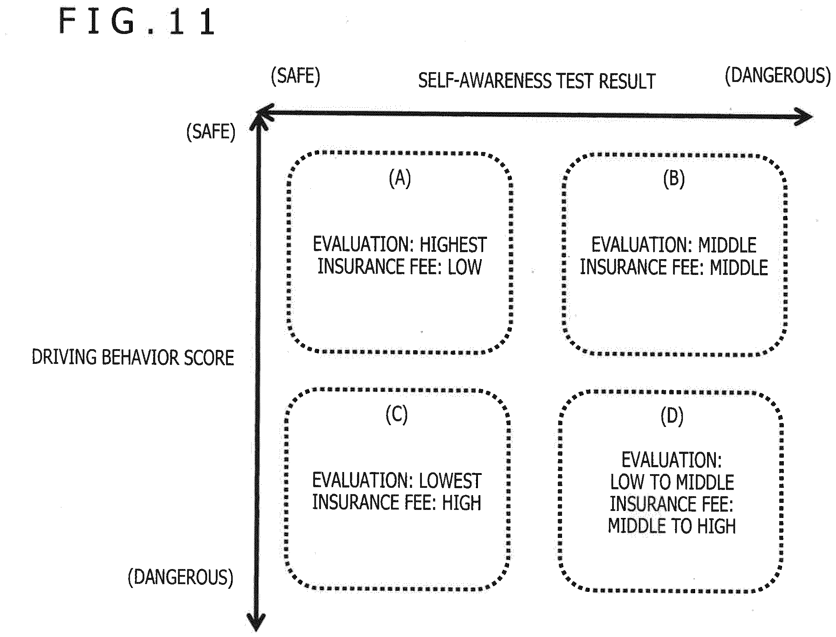

   FIG. 11 is another diagram explaining the insurance fee calculated by the insurance fee calculation unit.
[FIG. 12]

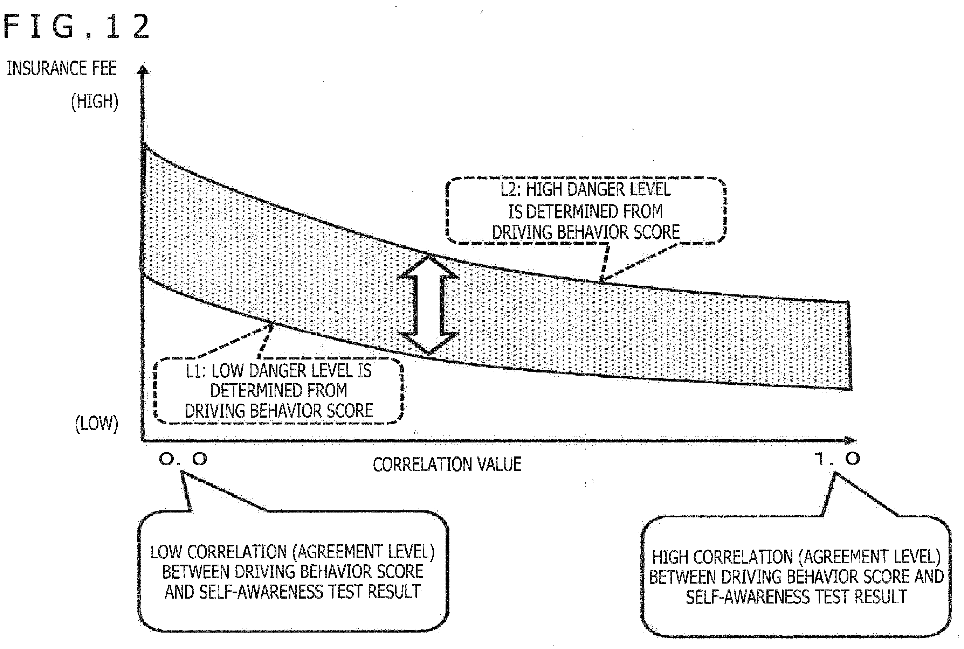

   FIG. 12 is further another diagram explaining the insurance fee calculated by the insurance fee calculation unit.
[FIG. 13]

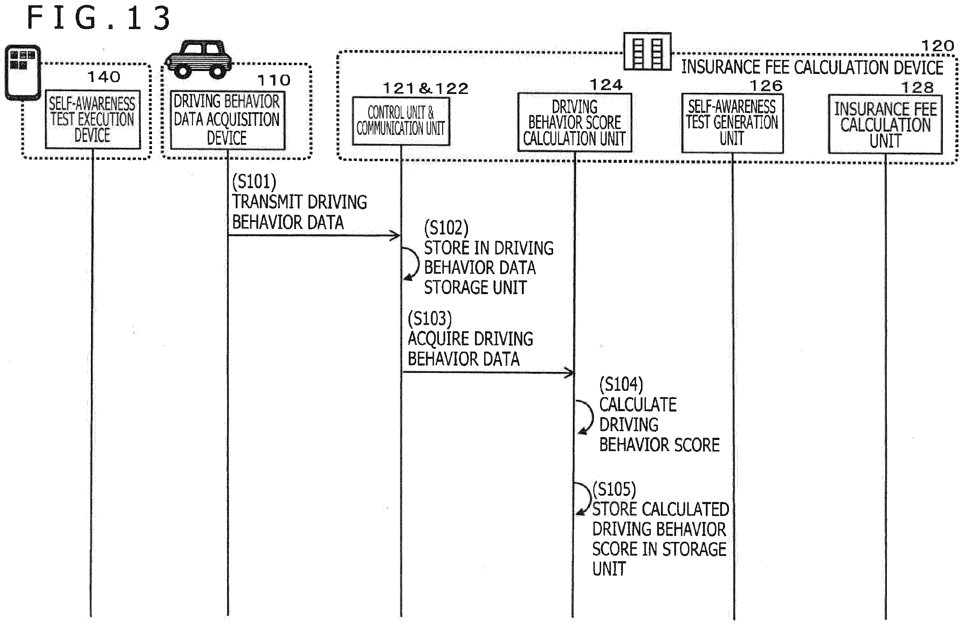

   FIG. 13 is a diagram explaining an information processing sequence.
[FIG. 14]

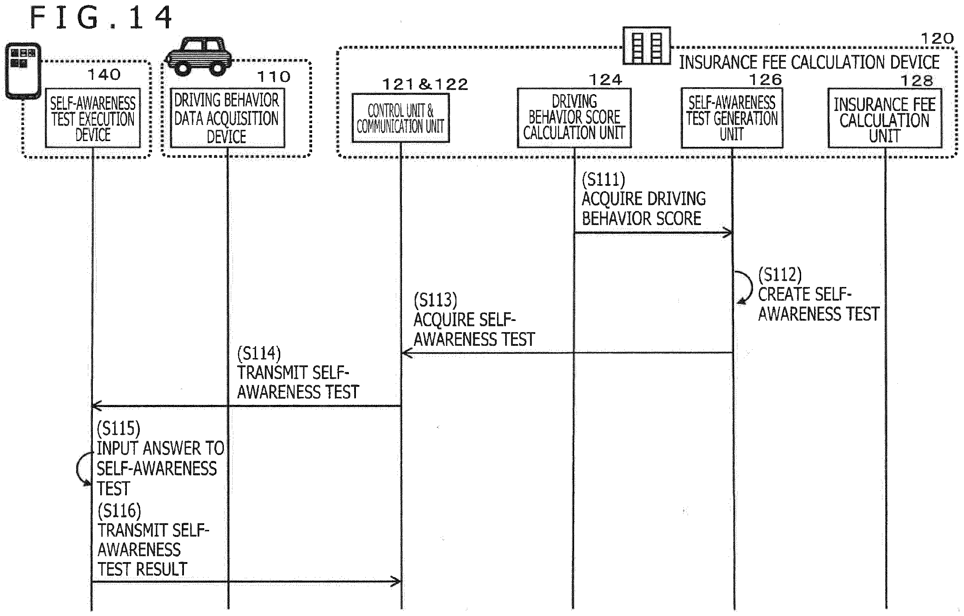

   FIG. 14 is another diagram explaining an information processing sequence.
[FIG. 15]

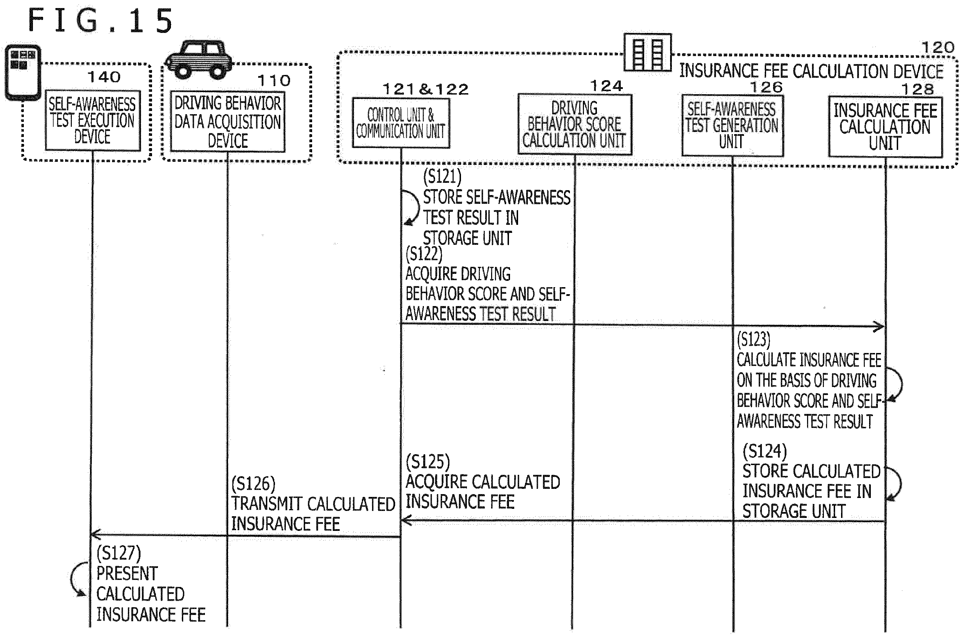

   FIG. 15 is further another diagram explaining an information processing sequence.
[FIG. 16]

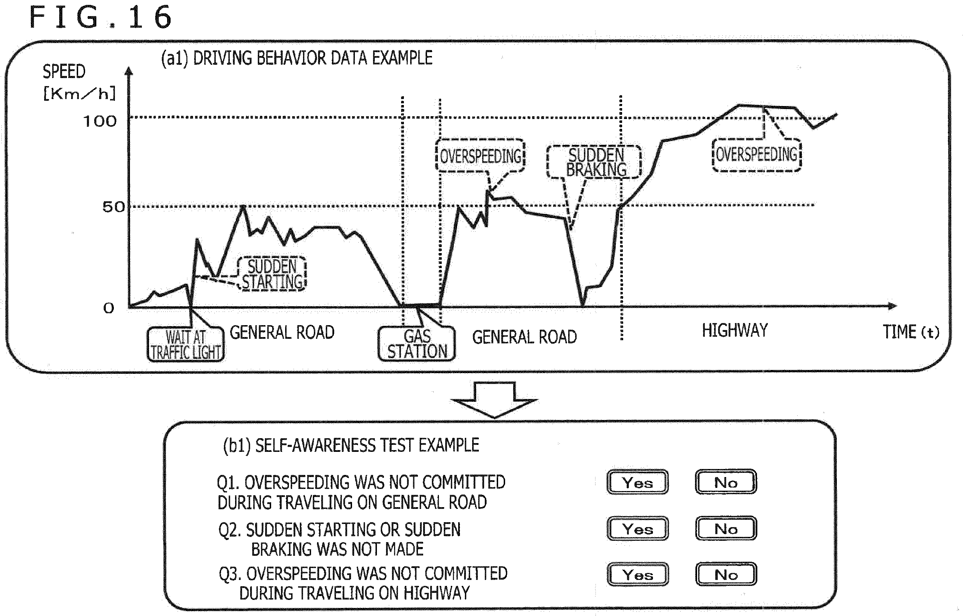

   FIG. 16 is a diagram explaining an example of the self-awareness test based on driving behavior data.
[FIG. 17]

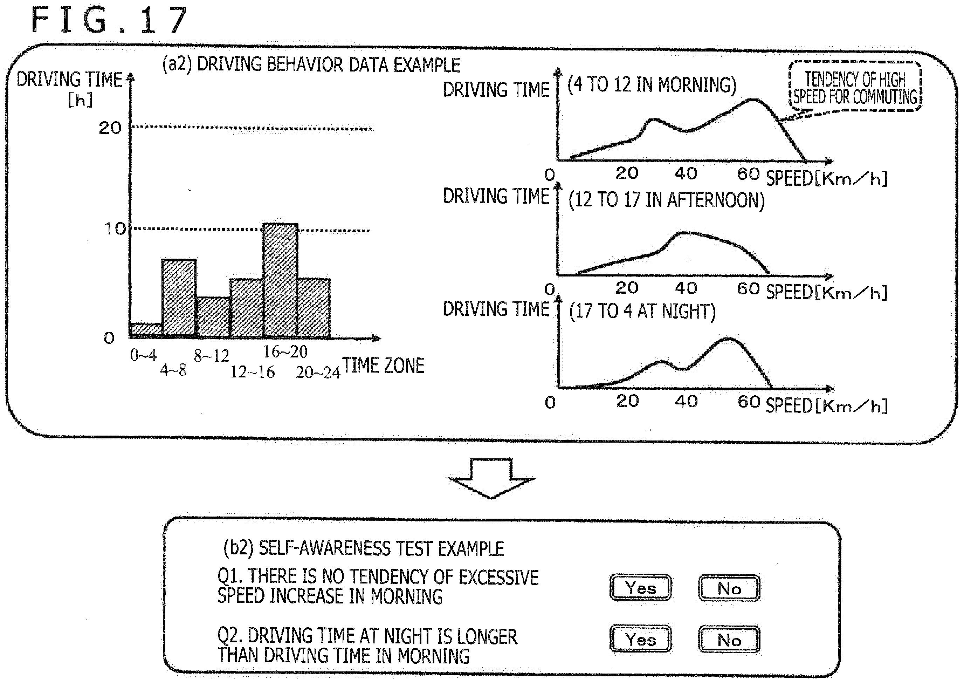

   FIG. 17 is another diagram explaining an example of the self-awareness test based on driving behavior data.
[FIG. 18]

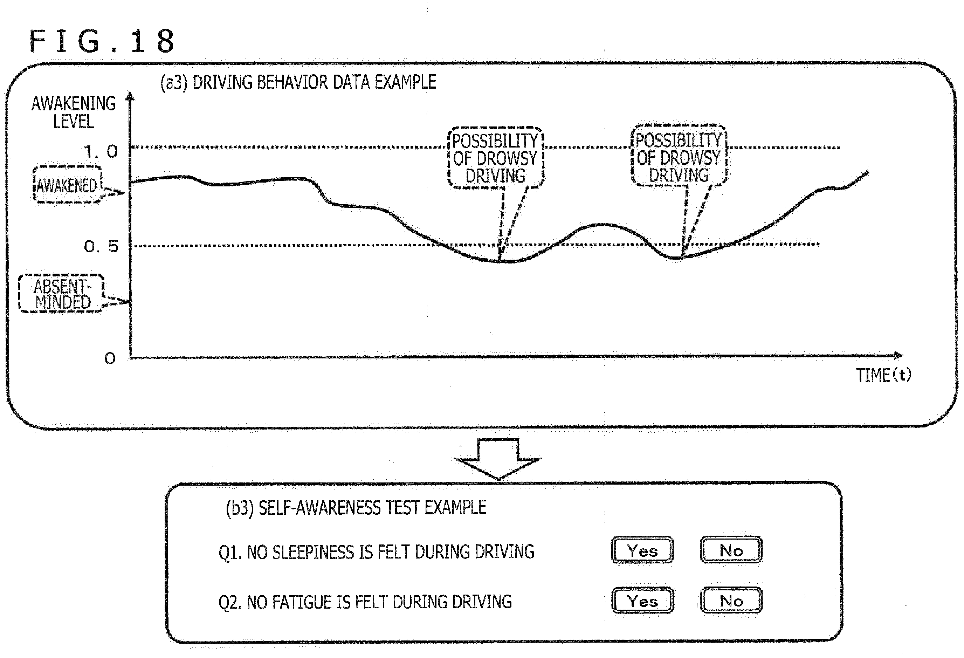

   FIG. 18 is further another diagram explaining an example of the self-awareness test based on driving behavior data.
[FIG. 19]

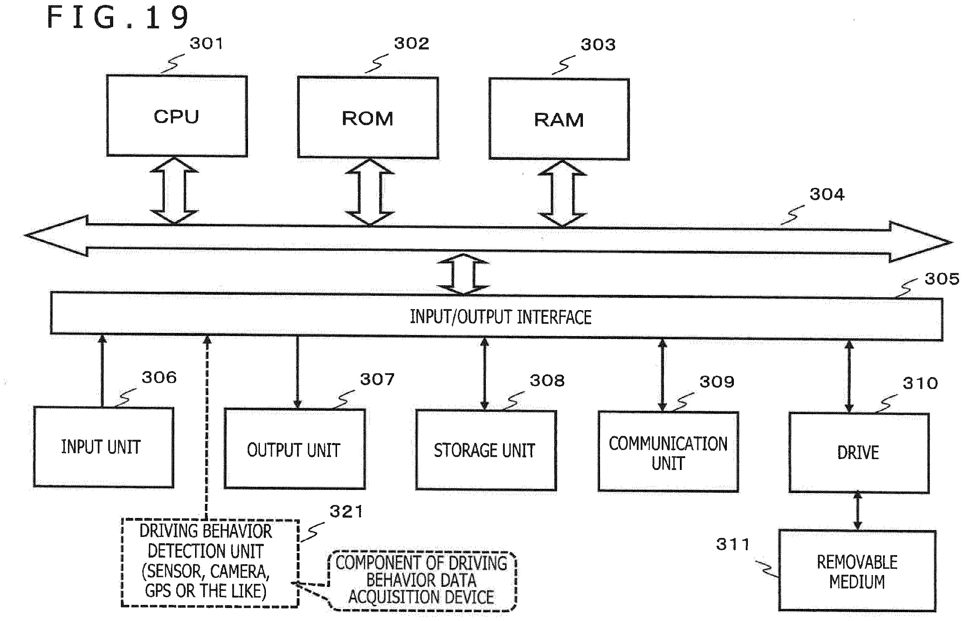

   FIG. 19 is a diagram explaining a hardware configuration example of a processing device applied to a process of the present disclosure.

### [Description of Embodiment]

Details of an information processing device, an information processing system, an information processing method, and a program of the present disclosure will be hereinafter described with reference to the drawings. Note that the description is presented in accordance with following items.
1. Outline of telematics insurance
2. Configuration example of insurance fee calculation using self-awareness test of driver
3. Acquisition of driving behavior data and self-awareness test result, and sequence of insurance fee calculation process
4. Example of self-awareness test corresponding to driving behavior of driver
5. Configuration example of information processing device
6. Summary of configurations of present disclosure

### <1. Outline of telematics insurance>

An outline of a telematics insurance will be initially described with reference to FIG. 1.

As described above, there are two types of the telematics insurance, i.e., a traveling distance linkage type linked with only a traveling distance (PAYD: Pay As You Drive), and a driving behavior linkage type which calculates an insurance fee considering driving characteristics of a driver, such as driving characteristics of frequencies of sudden braking and sudden starting (PHYD: Pay How You Drive).

The driving behavior linkage type (PHYD) telematics insurance calculates an insurance fee on the basis of driving characteristics of a driver.

An outline of an insurance fee calculation process will be described with reference to FIG. 1 and figures after FIG. 1.

FIG. 1 depicts a vehicle 10 and an insurance company 20.

A driver 11, who is a target person of insurance fee calculation, is present in the vehicle 10 and drives the vehicle 10.

The vehicle 10 is equipped with various sensors for acquiring driving characteristics. Specifically, there are provided various driving behavior data acquisition devices, such as an acquisition device for acquiring traveling distance and traveling speed information, a detection sensor for detecting sudden braking, sudden starting, and sudden steering, and a device for detecting a time zone of driving.

Data acquired by the driving behavior data acquisition devices equipped on the vehicle 10 is transmitted to an information processing device 21 of the insurance company 20 via a communication unit of the vehicle, for example.

Note that adoptable is such a configuration in which data is sequentially transmitted, or a configuration in which data acquired in a predetermined period, such as one week and one month, and accumulated in a storage unit inside the vehicle 10 is collectively transmitted as accumulated data.

Alternatively, also adoptable is a configuration in which the driver 11 submits, to the insurance company 20, a medium where data stored in the storage unit of the vehicle 10 is recorded.

The information processing device 21 of the insurance company 20 analyzes the driving behavior data in units of a predetermined time, calculates an insurance fee based on driving characteristics of the driver 11, and demands the insurance fee.

In a case where an insurance fee calculation period is set to one month, for example, such a setting is adoptable which decreases the insurance fee at the time of a determination of a small number of dangerous driving histories for one month of the calculation period, and increases the insurance fee at the time of a determination of a large number of dangerous driving histories.

The information processing device 21 of the insurance company 20 calculates the insurance fee in accordance with an insurance fee calculation algorithm set by the insurance company.

Specifically, the insurance fee is determined in accordance with a setting depicted in FIG. 2, for example.

A graph depicted in FIG. 2 has a horizontal axis representing a driving danger level. The left side indicates a lower danger level, and increases with nearness to the right side.

A vertical axis represents a calculated insurance fee. The insurance fee increases with nearness to the upper side.

The driving danger level is determined on the basis of data acquired from the driving behavior data acquisition devices equipped on the vehicle 10. Specifically, a high danger level is determined in a case of frequent sudden braking, sudden starting, sudden steering, and high-speed traveling, for example.

When such a determination is made, the calculated insurance fee increases.

As described above, the driving behavior linkage type (PHYD) telematics insurance calculates the insurance fee on the basis of driving characteristics of the driver.

For example, in a case of frequent sudden braking, sudden starting, or sudden steering, it is determined that dangerous driving is frequently performed. In this case, a high insurance fee is set.

However, as described above, sudden braking is often used for avoiding a danger, for example. Accordingly, many people have such an opinion that a setting of a high insurance fee for a reason of frequent sudden braking is questionable.

### <2. Configuration example of insurance fee calculation using self-awareness test of driver>

Described next will be a configuration example of the present disclosure which analyzes not only driving characteristic data acquired by the sensor or the like equipped on the vehicle, but also an awareness level of the driver concerning driving of the driver, and calculates an insurance fee on the basis of an analysis result.

FIG. 3 is a block diagram depicting an information processing system according to an embodiment of the present disclosure.

The embodiment depicted in FIG. 3 includes following three information processing devices:
(a) a driving behavior data acquisition device (vehicle information processing device) 110;
(b) an insurance fee calculation device (insurance company information processing device) 120; and
(c) a self-awareness test execution device (user information processing device (e.g., smartphone)) 130.

(a) The driving behavior data acquisition device (vehicle information processing device) 110 is an information processing device which includes various types of sensors and the like equipped on the vehicle, and acquires driving behavior data such as driving characteristics of the driver. The driving behavior data acquired by the driving behavior data acquisition device (vehicle information processing device) 110 is transmitted to the insurance fee calculation device (insurance company information processing device) 120.

(b) The insurance fee calculation device (insurance company information processing device) 120 is an information processing device of the insurance company, and executes an insurance fee calculation process by applying the driving behavior data acquired from the driving behavior data acquisition device (vehicle information processing device) 110.

The insurance fee is calculated considering not only the driving behavior data but also an awareness level of the driver concerning driving of the driver.

The insurance fee calculation device (insurance company information processing device) 120 creates a self-awareness test for determining the awareness level of the driver, and presents the self-awareness test to the driver.

(c) The self-awareness test execution device (user information processing device) 130 is an information processing device which receives the self-awareness test created by the insurance fee calculation device (insurance company information processing device) 120, displays the self awareness test, and causes the user (driver) to execute the self-awareness test.

The self-awareness test execution device (user information processing device) 130 may be constituted by a portable communication terminal such as a smartphone.

Alternatively, a display unit such as a navigation system equipped on the vehicle may be used as a UI (user interface), and adopted to the self-awareness test execution device (user information processing device) 130.

For example, as depicted in FIG. 4, a self-awareness test execution device a 130a constituted by a smartphone, or a self-awareness test execution device b 130b constituted by an in-vehicle UI functioning as both a display unit and an input unit, such as a touch panel type display equipped on the vehicle, may be adopted.

The self-awareness test execution device (user information processing device) 130 causes the user (driver) to execute the self-awareness test created by the insurance fee calculation device (insurance company information processing device) 120, and transmits test result data indicating a result of the self-awareness test to the insurance fee calculation device (insurance company information processing device) 120.

The insurance fee calculation device (insurance company information processing device) 120 calculates an insurance fee by using the driving behavior data acquired from the driving behavior data acquisition device (vehicle information processing device) 110, and the test result data acquired from the self-awareness test execution device (user information processing device) 130.

Note that such a setting is also adoptable which sends the self-awareness test generated by the insurance fee calculation device (insurance company information processing device) 120 to the driver corresponding to an insurance policyholder by mail or the like without using the self-awareness test execution device (user information processing device) 130. In this case, the driver transmits an answer to the insurance fee calculation device (insurance company information processing device) 120.

Detailed configurations of respective devices depicted in FIG. 3 will be next described.

The driving behavior data acquisition device (vehicle information processing device) 110 includes a control unit 111, a sensor 112, a camera 113, a position information acquisition unit (GPS) 114, a driving behavior data acquisition unit 115, and a communication unit 116.

Each of the sensor 112, the camera 113, and the position information acquisition unit (GPS) 114 acquires various driving behavior data used for analyzing driving characteristics of the driver of the vehicle.

Specifically, the driving behavior data include traveling information such as a traveling distance, a traveling time, and a traveling speed, operation information associated with an accelerator, a brake, and a steering wheel, and others.

Note that the sensor 112, which is a single sensor in the figure, includes a plurality of sensors detecting operation information associated with the accelerator, the brake, and the steering wheel, and others as well as traveling information.

The driving behavior data acquisition unit 115 accumulates data acquired by the sensor 112, the camera 113, and the position information acquisition unit (GPS) 114, and transmits the accumulated data to the insurance fee calculation device (insurance company information processing device) 120 via the communication unit 116. Note that identifiers (IDs) as attribute information for identifying the driving behavior data acquisition device (vehicle information processing device) 110 and the driver are added to the transmission data.

Note that the control unit 111 performs integrated control of processes executed by the respective components of the driving behavior data acquisition device (vehicle information processing device) 110. For example, the control unit 111 executes processing control in accordance with a processing program stored in a not-depicted storage unit.

FIG. 5 depicts a specific example of driving behavior data acquired by the driving behavior data acquisition device 110.

The example depicted in FIG. 5 is correspondence data between an acquisition period, a driving behavior data type, and acquired data.

The acquisition period is set to five days from October 1, 2016 to October 5, 2016. Driving behavior data acquired during this period is stored in the storage unit inside the vehicle, and then transmitted to the insurance fee calculation device 120 via the communication unit 116.

As depicted in FIG. 5, the driving behavior data type includes following respective pieces of data.
(1) traveling distance
(2) traveling speed
(3) number of times of sudden starting
(4) number of times of sudden braking
(5) number of times of sudden steering
(6) traveling distance in each time zone

Note that the examples depicted in the figure are presented only by way of example. Other various data may be acquired.
(1) The traveling distance is total traveling distance data for five days from October 1, 2016 to October 5, 2016 corresponding to the data acquisition period.
(2) The traveling speed is data associated with the traveling speed and acquired in time series in the data acquisition period.
(3) The number of times of sudden starting is the number of times of execution of a starting process which produces a larger speed change at a start than a threshold specified beforehand in the data acquisition period, for example.
(4) The number of times of sudden braking is the number of times of execution of a stopping process which produces a larger speed change at a stop than a threshold specified beforehand in the data acquisition period, for example.
(5) The number of times of sudden steering is the number of times of a steering operation at a speed higher than a threshold specified beforehand in the data acquisition period, for example.
(6) The traveling distance in each time zone is traveling distance data for each of time zones of the morning, the daytime, the evening, and the night.

For example, the driving behavior data acquisition device 110 acquires various driving behavior data as described above, and transmits the acquired data to the insurance fee calculation device (insurance company information processing device) 120.

A configuration and a process associated with the insurance tee calculation device (insurance company information processing device) 120 will be next described while returning to FIG. 3.

The insurance fee calculation device (insurance company information processing device) 120 includes a control unit 121, a communication unit 122, a driving behavior data storage unit 123, a driving behavior score calculation unit 124, a driving behavior score storage unit 125, a self-awareness test generation unit 126, a test result data storage unit 127, an insurance fee calculation unit 128, an insurance fee calculation unit 128, and an insurance fee information storage unit 129.

The control unit 121 performs integrated control of processes executed by the respective components of the insurance fee calculation device (insurance company information processing device) 120. For example, the control unit 121 executes processing control in accordance with a processing program stored in a not-depicted storage unit.

The communication unit 122 receives driving behavior data transmitted via the communication unit 116 of the driving behavior data acquisition device (vehicle information processing device) 110, and stores the received data in the driving behavior score storage unit 125.

Note that the driving behavior data is stored in the driving behavior data storage unit 123 as data corresponding to a user (driver) registered beforehand under control by the control unit 121.

As described above, the identifiers (IDs) of the driving behavior data acquisition device (vehicle information processing device) 110 and the driver are added to the driving behavior data transmitted via the communication unit 116 of the driving behavior data acquisition device (vehicle information processing device) 110. The control unit 121 stores the driving behavior data corresponding to the user (driver) in the driving behavior data storage unit 123 on the basis of these pieces of given data.

The driving behavior score calculation unit 124 acquires the driving behavior data stored in the driving behavior data storage unit 123, and calculates a driving behavior score. The driving behavior score is data as a collection of driving evaluation values and driving characteristics of the driver.

The driving behavior score calculated by the driving behavior score calculation unit 124 is stored in the driving behavior score storage unit 12b.

FIG. 6 depicts specific examples of the driving behavior score calculated by the driving behavior score calculation unit 124.

The driving behavior score calculated by the driving behavior score calculation unit 124 is calculated on the basis of driving behavior data acquired in a predetermined data acquisition period.

In the example depicted in FIG. 6, the data acquisition period is set to five days from October 1, 2016 to October 5, 2016.

The driving behavior score depicted in FIG. 6 is calculated on the basis of the driving behavior data acquired in this data acquisition period.

The driving behavior score in the example depicted in FIG. 6 includes following respective pieces of data.
(1) safety level
(2) main traveling time zone
(3) average traveling speed
(4) number of times of sudden braking
(5) number of times of sudden starting
(6) number of times of sudden steering

Note that these score setting examples are presented only by way of example. Other settings are adoptable.

(1) The safety level is an evaluation value indicating a safety level of driving by the driver. For example, the safety level is set to any one of four-stage evaluations constituted by A, B, C, and D in a descending order of the safety level, for example.

This evaluation value is calculated while taking the entire driving behavior data acquired by the driving behavior data acquisition device 110 into consideration.

(2) The main traveling time zone is a traveling time zone determined on the basis of the driving behavior data acquired by the driving behavior data acquisition device 110. For example, the two time zones corresponding to the longest and the second longest traveling distances are selected from the four sections of the morning, the daytime, the evening, and the night.

(3) The average traveling speed is an average traveling speed determined on the basis of the driving behavior data acquired by the driving behavior data acquisition device 110.

Each of (4) the number of times of sudden braking, (5) the number of times of sudden starting, and (6) the number of times of sudden steering is data indicating a frequency or an infrequency of sudden braking, sudden starting, or sudden steering determined on the basis of the driving behavior data acquired by the driving behavior data acquisition device 110. In a case where the number of times is larger than a threshold specified beforehand, "frequency" is set. In a case where the number of times is equal to or smaller than the threshold, "non-frequency" is set.

The driving behavior score calculated by the driving behavior score calculation unit 124 is stored in the driving behavior score storage unit 125.

Next, the description of the configuration and the process associated with the insurance fee calculation device 120 will continue while returning to FIG. 3.

The self-awareness test generation unit 126 acquires the driving behavior score calculated by the driving behavior score calculation unit 124 and stored in the driving behavior score storage unit 125, and generates a self-awareness test.

The self-awareness test is a test answered by the driver of the vehicle as a target person of insurance calculation, i.e., the driver from whom the driving behavior data has been acquired, and is a test for checking how the driver is aware of the driving situation within the data acquisition period in which the driving behavior data has been acquired.

The self-awareness test generation unit 126 acquires the driving behavior score calculated by the driving behavior score calculation unit 124 and stored in the driving behavior score storage unit 125, generates a self-awareness test, and transmits the generated test to a self-awareness test execution device 130 via the communication unit 122.

The self-awareness test execution device 130 displays the test generated by the self-awareness test generation unit 126 on a UI (user interface) 134 such as a display unit. The driver inputs answers to the test, and transmits a test result to the insurance fee calculation device 120.

Described with reference to FIG. 7 will be an example of the self-awareness test generated by the self-awareness test generation unit 126 and displayed on the UI (user interface) 134 of the self-awareness test execution device 130.

The self-awareness test depicted in FIG. 7 includes following question items.
Q1. How long was the traveling distance?
Q2. In which traveling time zone did you mainly drive?
Q3. Which do you think is your safe driving level (A (high) to D (low))?
Q4. Do you think sudden braking was frequent?
Q5. Do you think sudden steering was frequent?

The self-awareness test includes various questions like these examples.

The driver as the insurance policyholder displays the test depicted in FIG. 7 on the self-awareness test execution device 130, inputs answers to the respective questions, and transmits a test result to the insurance fee calculation device 120.

The description of the configuration and the process associated with the insurance fee calculation device 120 will continue while returning to FIG. 3.

The test result transmitted from the self-awareness test execution device 130 is stored in the test result data storage unit 127.

The insurance fee calculation unit 128 receives an input of the driving behavior score associated with the driver as the insurance policyholder and stored in the driving behavior score storage unit 125, and the self-awareness test result associated with the same driver and stored in the test result data storage unit 127, and calculates an insurance fee by using these two pieces of data. The insurance fee thus calculated is stored in the insurance fee information storage unit 129.

An insurance fee calculation process executed by the insurance fee calculation unit 128 will be described with reference to FIG. 8.

FIG. 8 depicts processing steps S01 to S03 executed by the insurance fee calculation unit 128.

The respective processing steps will be described.

### (Step S01)

In the step S01, the insurance fee calculation unit 128 initially acquires a driving behavior score stored in the driving behavior score storage unit 125, and self-awareness test result data stored in the test result data storage unit 127.

These pieces of data are constituted by a driving behavior score and self-awareness test result data associated with driving of an identical driver as an identical target person of an insurance policyholder in an identical period.

### (Step S02)

In the step S02, the insurance fee calculation unit 128 subsequently calculates a correlation value (0 to 1) indicating a correlation (agreement level) between the two pieces of data, i.e., the driving behavior score acquired from the driving behavior score storage unit 125 and the self-awareness test result data acquired from the test result data storage unit 127.

This correlation value is a value set in such a manner as to approach 1 with an increase in the agreement level between the two pieces of data, and approach 0 with a decrease in the agreement level between the two items of data.

A specific example of a correlation value calculation process will be described with reference to FIG. 9.

FIG. 9 depicts a graph indicating an example of the correlation value calculation process.

A horizontal axis of the graph depicted in FIG. 9 represents a data agreement rate between respective corresponding items of the driving behavior score acquired from the driving behavior score storage unit 125, and the self-awareness test result data acquired from the test result data storage unit 127. In a case of disagreement between all the items, the agreement rate becomes 0%. In a case of agreement between all the items, the agreement rate becomes 100%.

A vertical axis represents a correlation value (0.0 to 1.0).

In a case where the data agreement rate is 0%, the correlation value becomes 0.0. In a case where the data agreement rate is 100%, the correlation value becomes 1.0.

Note that the agreement rate and the correlation value between the driving behavior score and the self-awareness test result data are set to proportional values in the example depicted in FIG. 9. However, the example of the correlation value calculation process depicted in FIG. 9 is presented only by way of example. Other various settings may be adopted. For example, such a configuration is adoptable which sets weights to the respective items set for the driving behavior score and the self-awareness test result data, and selects a large weight or a small weight for each of the items to set different effect levels for the calculated correlation values for calculation of the respective correlation values.

The description of the process performed by the insurance fee calculation unit 128 will continue while returning to FIG. 8.

When the process for calculating the correlation value (0 to 1) between the driving behavior score acquired from the driving behavior score storage unit 125 and the self-awareness test result data acquired from the test result data storage unit 127 is completed in the step S02, the process proceeds to the subsequent step S03.

### (Step S03)

In the step S03, the insurance fee calculation unit 128 calculates an insurance fee by applying the correlation value (0 to 1) calculated in the step S02, and stores the calculated insurance fee in the insurance fee information storage unit 129.

Various algorithms are applicable to the insurance fee calculation process. A basic correspondence relationship between the correlation value and the insurance fee is a relationship indicated in a graph depicted in FIG. 10, for example.

In the graph in FIG. 10, a horizontal axis represents a correlation value (0 to 1) between a driving behavior score and self-awareness test result data, while a vertical axis represents a calculated insurance fee.

As depicted in the graph in FIG. 10, the insurance fee is set to a high fee in a case where the correlation value between the driving behavior score and the self-awareness test result data is low (low agreement level). For example, the insurance fee is set to a fee higher than a specified reference insurance fee.

On the other hand, the insurance fee is set to a low fee in a case where the correlation value between the driving behavior score and the self-awareness test result data is high (high agreement level). For example, the insurance fee is set to a fee lower than the specified reference insurance fee.

The correspondence between the correlation value and the insurance fee basically tends to be established such that the insurance fee decreases as the correlation value increases as described above.

Note that the graph depicted in FIG. 10 is a graph indicating a tendency of one example of the correspondence relationship between the correlation value and the insurance fee. The actual insurance fee is calculated on the basis of the driving behavior data associated with the driver as the policyholder.

FIG. 11 depicts a setting example of the correspondence relationship between the driving behavior score and the self-awareness test result, and the insurance fee.

The example depicted in FIG. 11 classifies the correspondence relationship between the driving behavior score and the self-awareness test result into four sections (A, B, C, and D).

The sections (A) and (B) are sections where it is determined that driving performed by the driver is safe driving on the basis of the driving behavior score.

The sections (C) and (D) are sections where it is determined that driving performed by the driver is dangerous driving on the basis of the driving behavior score.

On the other hand, the sections (A) and (C) are sections where the driver thinks that driving performed by the driver is safe driving on the basis of the self-awareness test result.

The sections (B) and (D) are sections where the driver thinks that driving performed by the driver is dangerous driving on the basis of the self-awareness test result.

The insurance fee is calculated according to following definitions in the four sections (A to D).

In the section (A), it is determined that the driver performs safe driving on the basis of the driving behavior score, and the driver thinks that safe driving is performed on the basis of the self-awareness test result.

In the section (A), safe driving is actually performed, and the driver is aware that driving by the driver is safe driving. The section (A) corresponds to a section of agreement between the driving behavior and the driver's awareness, and exhibiting a high correlation value.

In this case, the evaluation value becomes highest, and the insurance fee is set to the lowest fee.

In the section (B), it is determined that the driver performs safe driving on the basis of the driving behavior score, and the driver thinks that dangerous driving is performed on the basis of the self-awareness test result.

In the section (B), safe driving is actually performed, but the driver is not aware that driving by the driver is safe driving. The section (B) corresponds to a section of disagreement between the driving behavior and the driver's awareness, and exhibiting a low correlation value.

In this case, the evaluation value becomes lower than the evaluation value in (A), and the insurance fee is set to a fee higher than in (A).

In the section (C), it is determined that the driver performs dangerous driving on the basis of the driving behavior score, but the driver thinks that safe driving is performed on the basis of the self-awareness test result.

In the section (C), dangerous driving is actually performed. Moreover, the driver thinks that driving by the driver is safe driving. The section (C) corresponds to a section of disagreement between the driving behavior and the driver's awareness, and exhibiting a low correlation value.

In this case, the evaluation value becomes the lowest, and the insurance fee is set to the highest.

In the section (D), it is determined that the driver performs dangerous driving on the basis of the driving behavior score, and the driver thinks that dangerous driving is performed on the basis of the self-awareness test result.

In the section (D), dangerous driving is actually performed, and the driver is aware that driving by the driver is dangerous driving. The section (D) corresponds to a section of agreement between the driving behavior and the driver's awareness, and exhibiting a high correlation value.

In this case, the evaluation value is low, but the evaluation becomes higher than in the section (C). The insurance fee is thus set to a fee lower than in (C).

FIG. 12 is a graph depicting a correspondence relationship between a correlation value and an insurance fee similarly to FIG. 10 described above.

In the graph in FIG. 12, a horizontal axis represents a correlation value (0 to 1) between a driving behavior score and self-awareness test result data, while a vertical axis represents a calculated insurance fee.

A range between curves L1 and L2 depicted in the graph in FIG. 12 corresponds to an example the insurance fee actually calculated.

In a case where the driver is determined to execute safe driving on the basis of the driving behavior score, the insurance fee is set along the line L1 depicted in a lower part of the figure.

On the other hand, in a case where the driver is determined to execute dangerous driving on the basis of the driving behavior score, the insurance fee is set along the line L2 depicted in an upper part of the figure.

In this manner, the insurance fee is determined in consideration of respective elements of:
(1) the driving situation of the driver determined on the basis of the driving behavior score; and
(2) the correlation value between the driving behavior score and the self-awareness test result.

As described above, in the step S03, the insurance fee calculation unit 128 depicted in FIG. 8 calculates the insurance fee by applying the correlation value (0 to 1) calculated in the step S02, and stores the calculated insurance fee in the insurance fee information storage unit 129.

The calculated insurance fee is presented to the driver as the insurance policyholder.

Note that the insurance fee is updated for each predetermined period. For example, such a setting is adoptable which updates the insurance fee each month by acquiring the driving behavior data and the result of the self-awareness test each month.

The self-awareness test execution device (user information processing device) 130 depicted in FIG. 3 will be next described.

The self-awareness test execution device (user information processing device) 130 is an information processing device which receives the self-awareness test created by the insurance fee calculation device (insurance company information processing device) 120, displays the self-awareness test, and causes the user (driver) to execute the self-awareness test.

As depicted in FIG. 3, the self-awareness test execution device (user information processing device) 130 includes a control unit 131, a communication unit 132, a memory 133, and a UI (user interface) 134.

The control unit 131 performs integrated control of processes executed by the respective components of the self-awareness test execution device (user information processing device) 130.

The communication unit 132 communicates with the insurance fee calculation device 120 to perform a process for transmitting a result of received answers of the self-awareness test, for example.

The memory 133 stores the self-awareness test, answer data, processing programs and the like.

The UI (user interface) 134 is a UI used as a display unit for the self-awareness test, an input unit for inputting answers, and others.

Note that the self-awareness test execution device (user information processing device) 130 may be constituted by a portable communication terminal, such as a smartphone, as described above. Alternatively, a display unit such as a navigation system equipped on the vehicle may be used as a UI (user interface), and adopted as the self-awareness test execution device (user information processing device) 130.

The self-awareness test execution device (user information processing device) 130 causes the user (driver) to execute the self-awareness test created by the insurance fee calculation device (insurance company information processing device) 120, and transmits test result data indicating a result of the self-awareness test to the insurance fee calculation device (insurance company information processing device) 120.

### <3. Acquisition of driving behavior data and result of self-awareness test, and sequence of insurance fee calculation process>

Described next with reference to sequence diagrams in FIGS. 13 to 15 will be sequences of acquisition of driving behavior data, execution of a self-awareness test, and an insurance fee calculation process using these pieces of data.

FIGS. 13 to 15 each depicts the components described with reference to FIG. 3, i.e., the three information processing devices of the self-awareness test execution device 140, the driving behavior data acquisition device 110, and the insurance fee calculation device 120 disposed in this order from the left.

Further depicted are following configurations as components of the insurance fee calculation device 120, i.e., the control unit 121 and the communication unit 122, the driving behavior score calculation unit 124, the self-awareness test generation unit 126, and the insurance fee calculation unit 128.

The sequences of the processes executed by the respective devices and the respective component units will be hereinafter described.

Note that data transmission and reception between the three information processing devices of the self-awareness test execution device 140, the driving behavior data acquisition device 110, the insurance fee calculation device 120 is achieved using the communication units of the respective devices.

Processing in respective steps depicted in FIG. 13 will be sequentially described.

### (Step S101)

In a step S101, the driving behavior data acquisition device 110 initially transmits driving behavior data acquired by various devices such as a sensor, a camera, and a GPS attached to an automobile to the insurance fee calculation device 120.

As described above with reference to FIG. 3, the driving behavior data acquisition device (vehicle information processing device) 110 includes the sensor 112, the camera 113, the position information acquisition unit (GPS) 114 and others, acquires various driving behavior data using these devices, and transmits the driving behavior data to the insurance fee calculation device 120.

For example, as described above with reference to FIG. 5, the driving behavior data acquisition device 110 acquires following driving behavior data, and transmits the acquired driving behavior data to the insurance fee calculation device 120.
(1) traveling distance
(2) traveling speed
(3) number of times of sudden starting
(4) number of times of sudden braking
(5) number of times of sudden steering
(6) traveling distance in each time zone

Note that these pieces of the driving behavior data are presented only by way of example. Other various types of data acquisition and transmission configuration may be adopted.

### (Step S102)

In a step S102, the driving behavior data transmitted from the driving behavior data acquisition device 110 to the insurance fee calculation device 120 in the step S101 is received by the communication unit 122 of the insurance fee calculation device 120, and then stored in the driving behavior data storage unit 123 under control by the control unit 121.

### (Steps S103 to S105)

Processing in subsequent steps S103 to S105 is processing executed by the driving behavior score calculation unit 124 of the insurance fee calculation device 120.

The driving behavior score calculation unit 124 acquires the driving behavior data stored in the driving behavior data storage unit 123, and calculates a driving behavior score.

As described above, the driving behavior score is data as a collection of driving evaluation values and driving characteristics of the driver.

The driving behavior score calculated by the driving behavior score calculation unit 124 is stored in the driving behavior score storage unit 125.

The driving behavior score calculation unit 124 calculates a driving behavior score as described above with reference to FIG. 6, for example, on the basis of driving behavior data acquired in a predetermined data acquisition period. More specifically, following data is calculated, for example.
(1) safety level
(2) main traveling time zone
(3) average traveling speed
(4) number of times of sudden braking
(5) number of times of sudden starting
(6) number of times of sudden steering

Note that these score setting examples are presented only by way of example. Other settings are adoptable.

The driving behavior score calculated by the driving behavior score calculation unit 124 is stored in the driving behavior score storage unit 125.

### (Steps S111 and S112)

Processing in steps S111 to S116 will be next described with reference to FIG. 14.

The processing in the steps S111 and S112 is chiefly executed by the self-awareness test generation unit 126 of the insurance fee calculation device 120.

As described above, the self-awareness test is a test answered by the driver of the vehicle as a target person of insurance calculation, i.e., the driver from whom the driving behavior data has been acquired, and is a test for checking how the driver is aware of the driving situation within the data acquisition period for acquiring the driving behavior data.

The self-awareness test generation unit 126 acquires the driving behavior score calculated by the driving behavior score calculation unit 124 and stored in the driving behavior score storage unit 125, and generates a self-awareness test.

Note that the self-awareness test to be generated may be a single test including common question items. However, the self-awareness test is preferably such a test which includes questions selected in accordance with the acquired driving behavior data.

A specific example of the test including question items corresponding to the driving behavior as mentioned herein will be described below.

### (Steps S113 and S114)

Subsequently, in the steps S113 and S114, the control unit 121 of the insurance fee calculation device 120 acquires the self-awareness test generated by the self-awareness test generation unit 126, and transmits the self-awareness test to the self-awareness test execution device 140 via the communication unit 122.

The self-awareness test execution device 140 as a transmission destination is a device carried by the driver as the insurance policyholder corresponding to a target person of insurance fee calculation, such as a smartphone.

### (Steps S115 and S116)

The processing in the subsequent steps S115 and S116 is processing executed by the self-awareness test execution device 140.

In the step S115, the self-awareness test execution device 140 carried by the driver, such as a smartphone, displays the self-awareness test received from the insurance fee calculation device 120 on a UI (user interface), such as a display unit. The driver inputs answers to the self-awareness test.

The self-awareness test displayed on the self-awareness test execution device 130 is a test described above with reference to FIG. 7, for example.

The example of the self-awareness test in FIG. 7 described above includes following question items.
Q1. How long was the traveling distance?
Q2. In which traveling time zone did you mainly drive?
Q3. Which do you think is your safe driving level (A (high) to D (low))?
Q4. Do you think sudden braking was frequent?
Q5. Do you think sudden steering was frequent?

The self-awareness test includes various questions like these examples.

The driver as the insurance policyholder displays the test depicted in FIG. 7, for example, on the self-awareness test execution device 130, receives an input of answers to respective questions, and transmits a test result to the insurance fee calculation device 120 in the step S116.

### (Step S121)

Processing in steps S121 to S127 will be next described with reference to FIG. 15.

In the step S121, the control unit 121 of the insurance fee calculation device 120 having received the test result from the self-awareness test execution device 130 stores the received self-awareness test result in the test result data storage unit 127.

### (Steps S122 to S124)

Processing in the steps S122 to S124 is processing chiefly executed by the insurance fee calculation unit 128 of the insurance fee calculation device 120.

The insurance fee calculation unit 128 acquires a driving behavior score associated with the driver as the insurance policyholder and stored in the driving behavior score storage unit 125, and a self-awareness test result associated with the same driver and stored in the test result data storage unit 127 in the step S122, and calculates an insurance fee using these two pieces of data in the step S123. The calculated insurance fee is stored in the insurance fee information storage unit 129 in the step S124.

The insurance fee calculation process is executed by the insurance fee calculation unit 128 in a manner similar to the manner of the corresponding process described above with reference to FIGS. 8 to 12.

For example, the range between curves L1 and L2 depicted in the graph in FIG. 12 corresponds to an example the insurance fee actually calculated.

More specifically, in a case where the driver is determined to execute safe driving on the basis of the driving behavior score, for example, the insurance fee is set along the line L1 depicted in the lower part of FIG. 12.

On the other hand, in a case where the driver is determined to execute dangerous driving on the basis of the driving behavior score, the insurance fee is set along the line L2 depicted in the upper part of FIG. 12.

The insurance fee is determined in consideration of respective elements of:
(1) the driving situation of the driver determined on the basis of the driving behavior score; and
(2) the correlation value between the driving behavior score and the self-awareness test result.

In this manner, the insurance fee calculation unit 128 calculates the insurance fee by applying the correlation value between the driving behavior score and the self-awareness test result in the step S123, and stores the calculated insurance fee in the insurance fee information storage unit 129 in the step S124.

### (Step S125 to S127)

The control unit 121 of the insurance fee calculation device 120 acquires the calculated insurance fee data calculated by the insurance fee calculation unit 128 and stored in the insurance fee information storage unit 129 in a step S125, and transmits the acquired insurance fee data to a device on the insurance policyholder side in a step S126.

The example depicted in the figure is an example which transmits the calculated insurance fee data from the insurance fee calculation device 120 to the self-awareness test execution device 140. However, the transmission destination is not limited to the self-awareness test execution device 140, but may be set to a vehicle equipped with the driving behavior data acquisition device 110, for example. Alternatively, a process for mailing the insurance fee data as a document may be performed.

In a step S127, the insurance policyholder displays the insurance fee information received from the insurance fee calculation device 120 on the display unit of the self-awareness test execution device 140, and checks the insurance fee information.

A series of processing is completed after execution of these processing.

Note that the processing described with reference to FIGS. 13 to 15 is repeatedly executed for each predetermined period, wherefore the insurance fee is updated for each predetermined period.

For example, such processing is adoptable which updates the insurance fee each month by acquiring the driving behavior data and the result of the self-awareness test each month.

### <4. Example of self-awareness test corresponding to driving behavior of driver>

As described above, the self-awareness test generation unit 126 of the insurance fee calculation device 120 generates the self-awareness test which is a test for checking how the driver is aware of the driving situation within the data acquisition period for acquiring driving behavior data.

The self-awareness test generation unit 126 acquires the driving behavior score calculated by the driving behavior score calculation unit 124 and stored in the driving behavior score storage unit 125, and generates a self-awareness test.

The self-awareness test to be generated herein may be a single test including common question items. However, the self-awareness test is preferably such a test which includes questions selected in accordance with acquired driving behavior data.

Specific examples of the test including question items corresponding to a driving behavior as mentioned herein will be described with reference to FIG. 16 and figures after FIG. 16.

FIG. 16 depicts following respective figures:
(a1) driving behavior data acquired from the target person of the insurance policyholder; and
(b1) a question item example of the self-awareness test generated on the basis of the driving behavior data in (a1) described above.

The driving behavior data in the figure (a1) of FIG. 16 is a graph which has a horizontal axis representing time, and a vertical axis representing a speed, and indicates history data associated with a traveling speed.

This data is acquired by the driving behavior data acquisition device 110 depicted in FIG. 3, and transmitted to the insurance fee calculation device 120.

The driving behavior score calculation unit 124 of Lhe insurance fee calculation device 120 calculates a driving behavior score based on the driving behavior data. The self-awareness test generation unit 126 of the insurance fee calculation device 120 generates question items of the self-awareness test on the basis of the generated score.

The driving behavior score calculation unit 124 generates a driving behavior score indicating overspeeding, sudden starting, or sudden braking on the basis of the driving behavior data in (a1) of FIG. 16.

The self-awareness test generation unit 126 generates a test including question items on the basis of which whether or not the driver is aware of overspeeding, sudden starting, or sudden braking can be determined with reference to the generated driving behavior score.

For example, a test which sets following question items is generated as depicted in (b1) of FIG. 16.
Q1. Overspeeding was not committed during traveling on a general road.
Q2. Sudden starting or sudden braking was not made.
Q3. Overspeeding was not committed on a highway.

For example, a self-awareness test including these question items is generated, and the driver answers the self-awareness test.

For example, in a case where all the answers to the above question items Q1 to Q3 are "Yes," it is confirmable that the driver is committing overspeeding, sudden starting, and sudden braking without awareness.

On the other hand, in a case where all the answers to the above question items Q1 to Q3 are "No," it is confirmable that the driver was aware of commitment of overspeeding, sudden starting, and sudden braking.

It is assumed that the case where all the answers to the above question items Q1 to Q3 are "Yes," i.e., the driver is committing overspeeding, sudden starting, or sudden braking without awareness is the most serious problem, and causes a future accident with high possibility.

In this case, the insurance fee calculation unit 128 calculates a high insurance fee.

FIG. 17 is a generation example of the self-awareness test based on driving behavior data different from the driving behavior data in FIG. 16.

Similarly to FIG. 16, FIG. 17 depicts following figures:
(a2) driving behavior data acquired from the target person of the insurance policyholder; and
(b2) a question item example of the self-awareness test generated on the basis of the driving behavior data in (a2) described above.

The driving behavior data in (a2) of FIG. 17 is data indicating a driving time of the driver for each time zone, and a speed distribution for each time zone of the morning, the afternoon, and the night.

This data is acquired by the driving behavior data acquisition device 110 depicted in FIG. 3, and transmitted to the insurance fee calculation device 120.

The driving behavior score calculation unit 124 of the insurance fee calculation device 120 calculates a driving behavior score based on the driving behavior data. The self-awareness test generation unit 126 of the insurance fee calculation device 120 generates question items of the self-awareness test on the basis of the generated score.

The driving behavior score calculation unit 124 generates a driving behavior score indicating driving characteristics for each time zone of the morning, the afternoon, and the night on the basis of the driving behavior data in (a2) of FIG. 17.

The self-awareness test generation unit 126 generates a test including question items on the basis of which whether or not the driver is aware of the driving characteristics in each time zone can be determined with reference to the generated driving behavior score.

For example, a test which sets following question items is generated as depicted in (b2) of FIG. 17.
Q1. There is no tendency of excessive speed increase in the morning.
Q2. Driving time at night is longer than driving time in the morning.

For example, a self-awareness test including these question items is generated, and the driver answers the self-awareness test.

For example, in a case where all the answers to the above question items Q1 to Q2 are "Yes," it is confirmable that the driver performs high-speed driving in the morning without awareness, and does not accurately recognize the driving time for each time zone.

On the other hand, in a case where all the answers to the above question items Q1 to Q2 are "No," it is confirmable that the driver is aware of high-speed driving in the morning, and accurately recognized the driving time for each time zone.

It is assumed that the case where all the answers to the above question items Q1 to Q2 are "Yes," i.e., the driver performs high-speed driving in the morning without awareness, and does not accurately recognize the driving time for each time zone is the most serious problem, and causes a future accident with high possibility.

In this case, the insurance fee calculation unit 128 calculates a high insurance fee.

FIG. 18 is a generation example of the self-awareness test based on driving behavior data further different from the driving behavior data in FIGS. 16 and 17.

Similarly to FIG. 16, FIG. 18 depicts following figures:
(a3) driving behavior data acquired from the target person of the insurance policyholder; and
(b3) a question item example of the self-awareness test generated on the basis of the driving behavior data in (a3) described above.

The driving behavior data in (a3) of FIG. 18 is data depicting a change of an awakening level of the driver with an elapse of time.

This data is acquired by the driving behavior data acquisition device 110 depicted in FIG. 3, and transmitted to the insurance fee calculation device 120.

Note that the awakening level of the driver is data analyzable from a captured face image of the driver, for example.

For example, a time when the awakening level lowers is such a time when the driver is performing drowsy driving, and may be absent-minded.

The driving behavior score calculation unit 124 of the insurance fee calculation device 120 calculates a driving behavior score based on the driving behavior data. The self-awareness test generation unit 126 of the insurance fee calculation device 120 generates question items of the self-awareness test on the basis of the generated score.

The driving behavior score calculation unit 124 generates a driving behavior score indicating that a time of a lowered awakening level of the driver is present on the basis of the driving behavior data in (a3) of FIG. 18.

The self-awareness test generation unit 126 generates a test including question items on the basis of which whether or not the driver is aware of the time of the lowered awakening level, i.e., the time when the driver was performing absent-minded driving can be determined with reference to the generated driving behavior score.

For example, a test which sets following question items is generated as depicted in (b3) of FIG. 18.
Q1. No sleepiness is felt during driving.
Q2. No fatigue is felt during driving.

For example, a self-awareness test including these question items is generated, and the driver answers the self-awareness test.

For example, in a case where all the answers to the above question items Q1 to Q2 are "Yes," it is confirmable that the driver is performing absent-minded driving without awareness.

On the other hand, in a case where all the answers to the above question items Q1 to Q2 are "No," it is confirmable that the driver is aware of and recognizes absent-minded driving.

It is assumed that the case where all the answers to the above question items Q1 to Q2 are "Yes," i.e., the driver is performing absent-minded driving without awareness is the most serious problem, and causes a future accident with high possibility.

In this case, the insurance fee calculation unit 128 calculates a high insurance fee.

In this manner, question items are set in accordance with acquired driving behavior data, and a self-awareness test is generated which includes questions on the basis of which whether or not the driver is aware of a driving behavior consequently achieved is accurately recognizable. Answers to the self-awareness test are received from the driver.

Such processes allow calculation of an insurance fee which accurately reflects a possibility of accident.

### <5. Configuration example of information processing device>

Described next with reference to FIG. 19 will be a hardware configuration example of an information processing device applicable to the respective information processing devices of the driving behavior data acquisition device 110, the insurance fee calculation device 120, and the self-awareness test execution device 130 each described with reference to FIG. 3.

Note that a driving behavior detection unit (a sensor, a camera, a GPS or the like) 321 in the components depicted in FIG. 19 are components dedicated for the driving behavior data acquisition device 110.

A configuration of hardware depicted in FIG. 19 will be hereinafter described.

A CPU (Central Processing Unit) 301 functions as a data processing unit which executes various processes under programs stored in a ROM (Read Only Memory) 302 or a storage unit 308. For example, the CPU 301 executes processes in accordance with the sequences described in the above-mentioned embodiment. The programs executed by the CPU 301 and data are stored in a RAM (Random Access Memory) 303. The respective CPU 301, ROM 302, and the RAM 303 are connected to each other via a bus 304.

The CPU 301 is connected to an input/output interface 305 via the bus 304. An input unit 306 including various switches, a keyboard, a touch panel, a mouse, a microphone or the like, and an output unit 307 including a display, a speaker or the like are connected to the input/output interface 305.

The driving behavior data acquisition device 110 includes the driving behavior detection unit (a sensor, a camera, a GPS or the like) 321, and acquires various driving behavior data.

The CPU 301 receives an input of commands from the input unit 306, and detection information from the driving behavior detection unit (a sensor, a camera, and a GPS or the like) 321, executes various processes, and outputs processing results to the output unit 307, for example.

The storage unit 308 connected to the input/output interface 305 includes a hard disk or the like, for example, and stores the programs executed by the CPU 301 and various data. A communication unit 309 functions as a transmission and reception unit for data communication via a network such as the Internet and a local area network, and further functions as a transmission and reception unit for broadcast waves to communicate with an external device.

A drive 310 connected to the input/output interface 305 drives a removable medium 311 such as a magnetic disk, an optical disk, a magneto-optical disk, and a semiconductor memory like a memory card, and executes recording or reading of data.

### <6. Summary of configurations of present disclosure>

An embodiment of the present disclosure has been described above in detail with reference to the specific embodiment. However, it is obvious that those skilled in the art can make corrections or substitutes for the embodiment without departing from the scope of the subject matters of the present disclosure. Accordingly, it should not be understood that the present invention is limited to the embodiment disclosed in a mode of an example of the present invention. The appended claims should be taken into consideration for determining the subject matters of the present disclosure.

Note that the technology disclosed in the present description may have following configurations.
(1) An information processing device including:
   an insurance fee calculation unit that receives an input of a driving behavior score based on driving behavior data associated with a driver of an automobile, and a test result of a self-awareness test concerning driving and requesting the driver to answer, and calculates an insurance fee of an automobile insurance, in which
   the insurance fee calculation unit executes an insurance fee calculation process that sets the insurance fee such that the insurance fee increases from a reference insurance fee in accordance with a decrease in a correlation between the driving behavior score and the self-awareness test result.
(2) The information processing device according to (1), in which the insurance fee calculation unit executes an insurance fee calculation process that sets the insurance fee higher than the reference insurance fee in a case where driving by the driver is determined to be dangerous on the basis of the moving behavior score of the driver with the low correlation between the driving behavior score and the self-awareness test result.
(3) The information processing device according to (1) or (2), in which the insurance fee calculation unit executes an insurance fee calculation process that sets the insurance fee such that the insurance fee decreases from the reference insurance fee in accordance with an increase in the correlation between the driving behavior score and the self-awareness test result.
(4) The information processing device according to any one of (1) to (3), in which the insurance fee calculation unit executes an insurance fee calculation process that sets the insurance fee lower than the reference insurance fee in a case where driving by the driver is determined to be safe on the basis of the moving behavior score of the driver with the high correlation between the driving behavior score and the self-awareness test result.
(5) The information processing device according to any one of (1) to (4), further including:
   a self-awareness test generation unit that generates the self-awareness test, in which
   the self-awareness test generation unit generates, on the basis of the driving behavior score, a test on the basis of which an awareness level corresponding to the driving behavior of the driver is determined.
(6) The information processing device according to any one of (1) to (5), further including:
   a driving behavior score calculation unit that generates a driving behavior score based on the driving behavior data, in which
   the moving behavior score calculation unit generates a driving behavior score that includes evaluation information based on the driving behavior data and associated with the driver.
(7) The information processing device according to any one of (1) to (6), in which the driving behavior data includes data based on at least a plurality of pieces of information selected from a traveling speed, traveling time zone information, and presence or absence of sudden braking, sudden starting, or sudden steering of the automobile.
(8) The information processing device according to any one of (1) to (7), further including:
   a communication unit that receives driving behavior data transmitted from the automobile.
(9) The information processing device according to any one of (1) to (8), in which the insurance fee calculation unit receives an input of a driving behavior score based on driving behavior data within a period specified beforehand, and a test result of a salf-awareness test concerning driving within the period and requesting the driver to answer, and calculates the insurance fee of the automobile insurance.
(10) The information processing device according to any one of (1) to (9), in which the insurance fee calculation unit updates the insurance fee by executing a new insurance fee calculation process that uses a new driving behavior score and a new test result of the self-awareness test for each of periods specified beforehand.
(11) An information processing system including:
   a driving behavior data acquisition device that is equipped on an automobile and acquires driving behavior data associated with a driver of the automobile;
   an insurance fee calculation device that receives the driving behavior data acquired by the driving behavior data acquisition device and calculates an insurance fee of an automobile insurance; and
   a self-awareness test execution device that outputs a self-awareness test for checking an awareness level of the driver concerning driving, and transmits an answer input by the driver to the insurance fee calculation device, in which
   the insurance fee calculation device is configured to receive an input of a driving behavior score based on the driving behavior data and a test result of the self-awareness test and calculate the insurance fee of the automobile insurance, and
   the insurance fee calculation device executes an insurance fee calculation process that sets the insurance fee such that the insurance fee decreases from a reference insurance fee in accordance with an increase in a correlation between the driving behavior score and the self-awareness test result, and sets the insurance fee such that the insurance fee increases from the reference insurance fee in accordance with a decrease in the correlation between the driving behavior score and the self-awareness test result.
(12) The information processing system according to (11), in which
   the insurance fee calculation device executes an insurance fee calculation process that
   sets the insurance fee lower than the reference insurance fee in a case where driving by the driver is determined to be safe on Lhe basis of the moving behavior score of the driver with the high correlation between the driving behavior score and the self-awareness test result, and
   sets an insurance fee higher than the reference insurance fee in a case where driving by the driver is determined to be dangerous on the basis of the moving behavior score of the driver with the low correlation between the driving behavior score and the self-awareness test result.
(13) An information processing system including:
   a driving behavior data acquisition device that is equipped on an automobile and acquires driving behavior data associated with a driver of the automobile; and
   an insurance fee calculation device that receives the driving behavior data acquired by the driving behavior data acquisition device and calculates an insurance fee of an automobile insurance, in which
   the insurance fee calculation device is configured to receive an input of a driving behavior score based on the driving behavior data and a test result of a self-awareness test for checking an awareness level of the driver concerning driving, and calculate the insurance fee of the automobile insurance, and
   the insurance fee calculation device executes an insurance fee calculation process that sets the insurance fee such that the insurance fee decreases from a reference insurance fee in accordance with an increase in a correlation between the driving behavior score and the self-awareness test result, and sets the insurance fee such that the insurance fee increases from the reference insurance fee in accordance with a decrease in the correlation between the driving behavior score and the self-awareness test result.
(14) An information processing method executed by an information processing device, in which
   the information processing device includes an insurance fee calculation unit that receives an input of a driving behavior score based on driving behavior data associated with a driver of an automobile, and a test result of a self-awareness test concerning driving and requesting the driver to answer, and calculates an insurance fee of an automobile insurance, and
   the insurance fee calculation unit executes an insurance fee calculation process that sets the insurance fee such that the insurance fee decreases from a reference insurance fee in accordance with an increase in a correlation between the driving behavior score and the self-awareness test result, and sets the insurance fee such that the insurance fee increases from the reference insurance fee in accordance with a decrease in the correlation between the driving behavior score and the self-awareness test result.
(15) A program under which an information processing device executes information processing, in which
   the information processing device includes an insurance fee calculation unit that receives an input of a driving behavior score based on driving behavior data associated with a driver of an automobile, and a test result of a self-awareness test concerning driving and requesting the driver to answer, and calculates an insurance fee of an automobile insurance, and
   under the program, the insurance fee calculation unit executes an insurance fee calculation process that sets the insurance fee such that the insurance fee decreases from a reference insurance fee in accordance with an increase in a correlation between the driving behavior score and the self-awareness test result, and sets the insurance fee such that the insurance fee increases from the reference insurance fee in accordance with a decrease in the correlation between the driving behavior score and the self-awareness test result.

In addition, a series of the processes described in the description can be executed by hardware, software, or a composite configuration of both. In a case where the processes are executed by software, a program where the processing sequences are recorded may be installed in a memory incorporated in dedicated hardware and provided within a computer and executed, or the program may be installed in a general-purpose computer capable of executing the respective types of processes and executed. For example, the program may be recorded in a recording medium beforehand. The program may be installed in a computer from the recording medium, or may be received via a network such as a LAN (Local Area Network) and the Internet, and installed in a built-in recording medium such as a hard disk.

Note that the respective types of processes described in the description may be executed not only in time series as described, but in parallel or individually in accordance with processing abilities of the devices executing the processes or as necessary. In addition, the system in the present description is constituted by a logical set of configurations of a plurality of devices. The devices of the respective configurations are not necessarily accommodated in an identical housing.

### [Industrial Applicability]

As described above, the configuration implemented according to one embodiment of the present disclosure is a configuration which calculates an insurance fee of an automobile insurance considering not only driving behavior data associated with a driver but also an awareness level of the driver concerning driving.

Specifically, for example, provided are: a driving behavior data acquisition device that acquires driving behavior data associated with a driver; an insurance fee calculation device that receives the driving behavior data and calculates an insurance fee of an automobile insurance; and a self-awareness test execution device that transmits, to the insurance fee calculation device, an answer by the driver to a self-awareness test for checking an awareness level of the driver concerning driving. The insurance fee calculation device receives an input of a driving behavior score based on the driving behavior data and a test result of the self-awareness test, and executes an insurance fee calculation process that sets the insurance fee such that the insurance fee decreases from a reference insurance fee in accordance with an increase in a correlation between the driving behavior score and the self-awareness test result, and sets the insurance fee such that the insurance fee increases from the reference insurance fee in accordance with a decrease in the correlation between the driving behavior score and the self-awareness test result.

This configuration achieves a configuration which calculates an insurance fee of an automobile insurance considering not only driving behavior data associated with the driver but also an awareness level of the driver concerning driving.

### [Reference Signs List]

10 Vehicle
11 Driver
20 Insurance company
21 Information processing device
110 Driving behavior data acquisition device
111 Control unit
112 Sensor
113 Camera
114 Position information acquisition unit
115 Driving behavior data acquisition unit
116 Communication unit
120 Insurance fee calculation device
121 Control unit
122 Communication unit
123 Driving behavior data storage unit
124 Driving behavior score calculation unit
125 Driving behavior score storage unit
126 Self-awareness test generation unit
127 Test result data storage unit
128 Insurance fee calculation unit
129 Insurance fee storage unit
130 Self-awareness test execution device
131 Control unit
132 Communication unit
133 Memory
134 UI (user interface)
301 CPU
302 ROM
303 RAM
304 Bus
305 Input/output interface
306 Input unit
307 Output unit
308 Storage unit
309 Communication unit
310 Drive
311 Removable medium
321 Driving behavior detection unit (sensor, camera, GPS or the like)

## Claims

1. An information processing device comprising:
an insurance fee calculation unit that receives an input of a driving behavior score based on driving behavior data associated with a driver of an automobile, and a test result of a self-awareness test concerning driving and requesting the driver to answer, and calculates an insurance fee of an automobile insurance, wherein
the insurance fee calculation unit executes an insurance fee calculation process that sets the insurance fee such that the insurance fee increases from a reference insurance fee in accordance with a decrease in a correlation between the driving behavior score and the self-awareness test result.

2. The information processing device according to claim 1, wherein the insurance fee calculation unit executes an insurance fee calculation process that sets the insurance fee higher than the reference insurance fee in a case where driving by the driver is determined to be dangerous on a basis of the moving behavior score of the driver with the low correlation between the driving behavior score and the self-awareness test result.

3. The information processing device according to claim 1, wherein the insurance fee calculation unit executes an insurance fee calculation process that sets the insurance fee such that the insurance fee decreases from the reference insurance fee in accordance with an increase in the correlation between the driving behavior score and the self-awareness test result.

4. The information processing device according to claim 1, wherein the insurance fee calculation unit executes an insurance fee calculation process that sets the insurance fee lower than the reference insurance fee in a case where driving by the driver is determined to be safe on a basis of the moving behavior score of the driver with the high correlation between the driving behavior score and the self-awareness test result.

5. The information processing device according to claim 1, further comprising:
a self-awareness test generation unit that generates the self-awareness test, wherein
the self-awareness test generation unit generates, on a basis of the driving behavior score, a test on a basis of which an awareness level corresponding to the driving behavior of the driver is determined.

6. The information processing device according to claim 1, further comprising:
a driving behavior score calculation unit that generates a driving behavior score based on the driving behavior data, wherein
the moving behavior score calculation unit generates a driving behavior score that includes evaluation information based on the driving behavior data and associated with the driver.

7. The information processing device according to claim 1, wherein the driving behavior data includes data based on at least a plurality of pieces of information selected from a traveling speed, traveling time zone information, and presence or absence of sudden braking, sudden starting, or sudden steering of the automobile.

8. The information processing device according to claim 1, further comprising:
a communication unit that receives driving behavior data transmitted from the automobile.

9. The information processing device according to claim 1, wherein the insurance fee calculation unit receives an input of a driving behavior score based on driving behavior data within a period specified beforehand, and a test result of a self-awareness test concerning driving within the period and requesting the driver to answer, and calculates the insurance fee of the automobile insurance.

10. The information processing device according to claim 1, wherein the insurance fee calculation unit updates the insurance fee by executing a new insurance fee calculation process that uses a new driving behavior score and a new test result of the self-awareness test for each of periods specified beforehand.

11. An information processing system comprising:
a driving behavior data acquisition device that is equipped on an automobile and acquires driving behavior data associated with a driver of the automobile;
an insurance fee calculation device that receives the driving behavior data acquired by the driving behavior data acquisition device and calculates an insurance fee of an automobile insurance; and
a self-awareness test execution device that outputs a self-awareness test for checking an awareness level of the driver concerning driving, and transmits an answer input by the driver to the insurance fee calculation device, wherein
the insurance fee calculation device is configured to receive an input of a driving behavior score based on the driving behavior data and a test result of the self-awareness test and calculate the insurance fee of the automobile insurance, and
the insurance fee calculation device executes an insurance fee calculation process that sets the insurance fee such that the insurance fee decreases from a reference insurance fee in accordance with an increase in a correlation between the driving behavior score and the self-awareness test result, and sets the insurance fee such that the insurance fee increases from the reference insurance fee in accordance with a decrease in the correlation between the driving behavior score and the self-awareness test result.

12. The information processing system according to claim 11, wherein
the insurance fee calculation device executes an insurance fee calculation process that
sets the insurance fee lower than the reference insurance fee in a case where driving by the driver is determined to be safe on a basis of the moving behavior score of the driver with the high correlation between the driving behavior score and the self-awareness test result, and
sets an insurance fee higher than the reference insurance fee in a case where driving by the driver is determined to be dangerous on a basis of the moving behavior score of the driver with the low correlation between the driving behavior score and the self-awareness test result.

13. An information processing system comprising:
a driving behavior data acquisition device that is equipped on an automobile and acquires driving behavior data associated with a driver of the automobile; and
an insurance fee calculation device that receives the driving behavior data acquired by the driving behavior data acquisition device and calculates an insurance fee of an automobile insurance, wherein
the insurance fee calculation device is configured to receive an input of a driving behavior score based on the driving behavior data and a test result of a self-awareness test for checking an awareness level of the driver concerning driving, and calculate the insurance fee of the automobile insurance, and
the insurance fee calculation device executes an insurance fee calculation process that sets the insurance fee such that the insurance fee decreases from a reference insurance fee in accordance with an increase in a correlation between the driving behavior score and the self-awareness test result, and sets the insurance fee such that the insurance fee increases from the reference insurance fee in accordance with a decrease in the correlation between the driving behavior score and the self-awareness test result.

14. An information processing method executed by an information processing device, wherein
the information processing device includes an insurance fee calculation unit that receives an input of a driving behavior score based on driving behavior data associated with a driver of an automobile, and a test result of a self-awareness test concerning driving and requesting the driver to answer, and calculates an insurance fee of an automobile insurance, and
the insurance fee calculation unit executes an insurance fee calculation process that sets the insurance fee such that the insurance fee decreases from a reference insurance fee in accordance with an increase in a correlation between the driving behavior score and the self-awareness test result, and sets the insurance fee such that the insurance fee increases from the reference insurance fee in accordance with a decrease in the correlation between the driving behavior score and the self-awareness test result.

15. A program under which an information processing device executes information processing, wherein
the information processing device includes an insurance fee calculation unit that receives an input of a driving behavior score based on driving behavior data associated with a driver of an automobile, and a test result of a self-awareness test concerning driving and requesting the driver to answer, and calculates an insurance fee of an automobile insurance, and
under the program, the insurance fee calculation unit executes an insurance fee calculation process that sets the insurance fee such that the insurance fee decreases from a reference insurance fee in accordance with an increase in a correlation between the driving behavior score and the self-awareness test result, and sets the insurance fee such that the insurance fee increases from the reference insurance fee in accordance with a decrease in the correlation between the driving behavior score and the self-awareness test result.
